# EUROPÄISCHE PATENTSCHRIFT

(11) **EP 4 294 857 B1**
(45) Veröffentlichungstag und Bekanntmachung des Hinweises auf die Patenterteilung: **25.09.2024**
(21) Anmeldenummer: 21724255.1
(22) Anmeldetag: 05.05.2021
(51) Int. Cl.: C08G 77/16, C08G 77/18, C08G 77/48

(54) **MISCHUNG AUS POLYMEREN ALKYLSILIKATEN**
MIXTURE OF POLYMERIC ALKYL SILICATES
MÉLANGE DE SILICATES D'ALKYLE POLYMÈRES

(43) Veröffentlichungstag der Anmeldung: 27.12.2023
(73) Patentinhaber: Wacker Chemie AG, 81671 München (DE)
(72) Erfinder: WIENKENHÖVER, Niklas, 81545 München (DE); WEIDNER, Richard, 84489 Burghausen (DE)
(74) Vertreter: Mieskes, Klaus Theoderich
(86) Internationale Anmeldenummer: PCT/EP2021/061905
(87) Internationale Veröffentlichungsnummer: WO 2022/233409

(56) Entgegenhaltungen:
- PEPPARD D F ET AL: "Preparation and synthetic applications of alkyl chlorosilicates", JOURNAL OF THE AMERICAN CHEMICAL SOCIETY, AMERICAN CHEMICAL SOCIETY, vol. 68, 1 January 1946 (1946-01-01), pages 70 - 72, XP002292434, ISSN: 0002-7863, DOI: 10.1021/JA01205A022

## Beschreibung

Die Erfindung betrifft eine neuartige Mischung aus polymeren Alkylsilikaten.

Silicone sind eine technisch sehr wichtige Stoffklasse, die in zahlreichen Technologiefeldern eingesetzt wird. Technisch wichtige Eigenschaften der Silicone sind beispielsweise ihre geringe Tendenz zur Kristallisation, welche Silicone gegenüber Kohlenstoff-basierten Polymeren auszeichnet. Silicone bleiben über weite Temperaturbereiche flüssig, sie weisen sehr niedrige Glastemperaturen auf.

Silicone werden aufgrund der enthaltenen Si-gebundenen Alkylgruppierungen in der Umwelt jedoch nur sehr schwer abgebaut.

Diese Eigenschaft schränkt die Anwendungsmöglichkeiten für Silicone in zunehmendem Maße ein. Deshalb besteht ein stetig wachsender Bedarf an alternativen, prinzipiell hydrolytisch spaltbaren, aber dennoch für praktische Anwendungen hinreichend hydrolyse-stabilen Materialien, welche die herkömmlichen Silicone ersetzen können.

In US 3992429 und US 4132664 werden silikatische Verbindungen der Formel [(R^{a}O)₃SiO]₃Si-O-KW-O-Si[OSi(OR^{a})₃]₃, wobei KW einen Kohlenwasserstoffrest bedeutet, beschrieben. Diese Systeme sind jedoch niedermolekular.

In vielen technischen Anwendungen sind jedoch niedermolekulare Verbindungen aufgrund ihrer Flüchtigkeit und ihres Migrationsverhaltens unerwünscht.

In der Anmeldung PCT/EP2020/079521 sind lineare polymere Alkylsilikate der Formel (II) beschrieben: 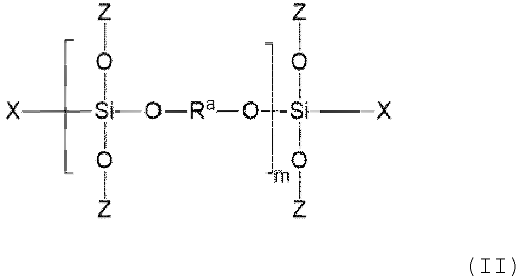 wobei
- **Z**: einen Rest der Formel -Si(OR^{b})₃ oder einen Rest der Formel -CR^{c}₃ bedeutet,
- **R^{a}**: unabhängig voneinander einen zweiwertigen unsubstituierten oder substituierten über Kohlenstoff gebundenen Rest oder einen zweiwertigen über Silicium gebundenen Rest bedeutet,
- **R^{b}**: unabhängig voneinander einen einwertigen unsubstituierten oder substituierten Kohlenwasserstoffrest mit 4 bis 40 C-Atomen bedeutet, der am α-Kohlenstoffatom verzweigt ist oder am β-Kohlenstoffatom zweifach verzweigt ist,
- **R^{c}**: unabhängig voneinander einen einwertigen unsubstituierten oder substituierten Kohlenwasserstoffrest mit 1 bis 50 C-Atomen bedeutet,
- **X**: ein Halogenatom, einen über Sauerstoff gebundenen unsubstituierten oder substituierten C₁- bis C₄₀-Kohlenwasserstoffrest, wobei einzelne Kohlenstoffatome durch Sauerstoffatome ersetzt sein können, einen Rest der Formel -O-Si(OR^{b})₃ oder einen Rest der Formel -OSiRⁿ₃ bedeutet,
- **Rⁿ**: unabhängig voneinander einen einwertigen unsubstituierten oder substituierten C₁- bis C₄₀-Kohlenwasserstoffrest bedeutet und
- **m**: eine ganze Zahl von mindestens 2 und höchstens 1000 bedeutet.

Peppard D F et al in "Preparation and synthetic applications of alkyl chlorosilicates", JOURNAL OF THE AMERICAN CHEMICAL SOCIETY, AMERICAN CHEMICAL SOCIETY, Bd. 68, 1. Januar 1946 (1946-01-01), Seiten 70-72 offenbaren die Herstellung von Derivaten von Alkylchlorsilikaten. Tabelle II und der Absatz 'Preparation of Mixed Orthoesters' auf Seite 71 offenbaren die spezifischen Verbindungen Diethylenglykol-Bis(Triallylsilikat) und Diethylenglykol-Bis(Tri(meth)allylsilikat).

Aufgabe der Erfindung ist es daher, die oben genannten Nachteile zu überwinden und polymere Alkylsilikate bereitzustellen, die ähnliche Eigenschaften aufweisen wie Silicone und daher Silicone ersetzen können.

Die Aufgabe wird durch die Erfindung gelöst.

Gegenstand der Erfindung ist eine Mischung aus polymeren Alkylsilikaten aufweisende Organosiliciumverbindung enthaltend zu mindestens 90 Gew-%, vorzugsweise zu mindestens 95 Gew.-%, eine Mischung aus polymeren Alkylsilikaten der Formel (I)

**[SiO_{4/2}]ₐ [(R^{x}O)SiO_{3/2}]_{b} [(R^{y}O)SiO_{3/2}]_{b}' [(R^{x}O)₂SiO_{2/2}]_{c} [(R^{x}O)(R^{y}O)SiO_{2/2}]_{c}' [(R^{y}O)₂SiO_{2/2}]_{c}" ' [(R^{x}O)₃SiO_{1/2}]_{d} [(R^{x}O)₂(R^{y}O)SiO_{1/2}]_{d}' [(R^{x}O)(R^{y}O)₂SiO_{1/2}]_{d}" ' [(R^{y}O)₃SiO_{1/2}]_{d}‴ [O_{1/2}R^{z}O_{1/2}]ₑ [O_{1/2}R^{z}OH]ₑ' [O_{1/2}R^{z}OR^{X}]ₑ" [O_{1/2}R^{z}OR^{y}*]ₑ‴** **(I),**

worin
die Indices **a, b, b', c, c', c", d, d', d", d‴, e', e"** und **e‴** unabhängig voneinander eine Zahl im Bereich von 0 bis 5000, vorzugsweise 0 bis 500, bevorzugt 0 bis 20, bedeuten, der Index **e** eine Zahl im Bereich von 2 bis 5000, vorzugsweise 2 bis 500, bevorzugt 2 bis 100, insbesondere 2 bis 20, bedeutet, mit der Maßgabe, dass die Summe aller Indices mindestens 5 beträgt;
die Reste **R^{x}** unabhängig voneinander ausgewählt sind aus Resten, die mindestens eine der folgenden Bedingungen erfüllen:
   (a) **R^{x}** ist ein Rest der Formel **-CHR^{p}₂** oder **-CR^{p}₃,** wobei **R^{p}** unabhängig voneinander einen einwertigen unsubstituierten oder substituierten Kohlenwasserstoffrest mit 1 bis 50 C-Atomen bedeutet,
   (b) **R^{x}** ist ein substituierter oder unsubstituierter, C₅-C₂₀-Kohlenwasserstoffrest, der am β-Kohlenstoffatom zweifach verzweigt ist,
   (c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
die Reste **R^{y}** unabhängig voneinander ein Wasserstoffatom, ein Methyl-, Ethyl-, n-Propyl-, oder n-Butylrest, vorzugsweise einen Methyl- oder Ethylrest, bedeuten;
worin die Reste **OR**^{y} teilweise durch Si-gebundene H-Atome ersetzt sein können;
**R^{y}*** ein Methyl-, Ethyl-, n-Propyl- oder n-Butylrest, vorzugsweise einen Methyl- oder Ethylrest, bedeutet;
die Reste **R^{z}** unabhängig voneinander einen zweiwertigen unsubstituierten oder substituierten über Kohlenstoff gebundenen Rest oder einen zweiwertigen über Silicium gebundenen Rest bedeuten, indem einzelne C- oder Si-Atome durch Sauerstoffatome ersetzt sein können;
mit der Maßgabe, dass die Einheiten **[O_{1/2}R^{z}O_{1/2}]** gebunden sind an zwei Einheiten, unabhängig voneinander ausgewählt aus der Gruppe der Einheiten **[SiO_{4/2}], [(R^{x}O)SiO_{3/2}], [(R^{y}O)SiO_{3/2}]**, **[(R^{x}O)₂SiO_{2/2}], [(R^{x}O)(R^{y}O)SiO_{2/2}], [(R^{y}O)₂SiO_{2/2}], [(R^{x}O)₃SiO_{1/2}**], **[(R^{x}O)₂(R^{y}O)SiO_{1/2}],** [**(R^{x}O)(R^{y}O)₂SiO_{1/2}] und [(R^{y}O)₃SiO_{1/2}];** mit der Maßgabe, dass die Einheiten **[O_{1/2}R^{z}OH], [O_{1/2}R^{z}OR^{x}]** und **[O_{1/2}R^{z}OR^{y}*]** gebunden sind an eine Einheit, unabhängig voneinander ausgewählt aus der Gruppe der Einheiten **[SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}];**
mit der Maßgabe, dass der molare Anteil an allen Resten **R^{y}** im polymeren Alkylsilikat höchstens 50 mol%, vorzugsweise höchstens 25 mol%, beträgt, jeweils bezogen auf die molare Menge der Summe an allen Resten **R^{x}**, **R^{y}** und **R^{y}***,
wobei der molare Anteil für den Rest **OR**^{y} gleich Wasserstoff höchstens 33 mol-%, vorzugsweise höchstens 15 mol-%, bevorzugt höchstens 10 mol-%, insbesondere höchstens 9 mol-%, beträgt, jeweils bezogen auf die molare Menge der Summe an allen Resten **OR^{x}** und **OR^{y}**;
und mit der Maßgabe, dass folgende polymere Alkylsilikate, ausschließlich bestehend aus Verbindungen der Formel II, ausgeschlossen sind: 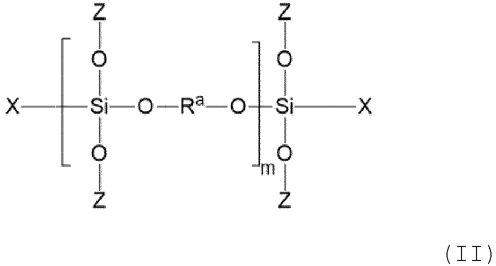 wobei
   - **Z**: einen Rest der Formel -Si(OR^{b})₃ oder einen Rest der Formel -CR^{c}₃ bedeutet,
   - **R^{a}**: unabhängig voneinander einen zweiwertigen unsubstituierten oder substituierten über Kohlenstoff gebundenen Rest oder einen zweiwertigen über Silicium gebundenen Rest bedeutet,
   - **R^{b}**: unabhängig voneinander einen einwertigen unsubstituierten oder substituierten Kohlenwasserstoffrest mit 4 bis 40 C-Atomen bedeutet, der am α-Kohlenstoffatom verzweigt ist oder am β-Kohlenstoffatom zweifach verzweigt ist,
   - **R^{c}**: unabhängig voneinander einen einwertigen unsubstituierten oder substituierten Kohlenwasserstoffrest mit 1 bis 50 C-Atomen, vorzugsweise 1 bis 10 C-Atomen, bevorzugt 1 bis 5 C-Atomen, bedeutet,
   - **X**: ein Halogenatom, einen über Sauerstoffgebundenen unsubstituierten oder substituierten C₁- bis C₄₀-Kohlenwasserstoffrest, wobei einzelne Kohlenstoffatome durch Sauerstoffatome ersetzt sein können, einen Rest der Formel -O-Si(OR^{b})₃ oder einen Rest der Formel -OSiRⁿ₃ bedeutet,
   - **Rⁿ**: unabhängig voneinander einen einwertigen unsubstituierten oder substituierten C₁- bis C₄₀-Kohlenwasserstoffrest bedeutet und
   - **m**: eine ganze Zahl von mindestens 2, vorzugsweise mindestens 5 und höchstens 1000, vorzugsweise höchstens 500, bevorzugt höchstens 100, bedeutet.

Bevorzugt bestehen die Organosiliciumverbindungen zu 100 Gew.-% aus einer Mischung aus polymeren Alkylsilikaten der Formel (I).

Gegenstand der Erfindung ist daher eine Mischung aus polymeren Alkylsilikaten der Formel (I)

**[SiO_{4/2}]ₐ [(R^{x}O)SiO_{3/2}]_{b} [(R^{y}O)SiO_{3/2}]_{b}' [(R^{x}O)₂SiO_{2/2}]_{c} [(R^{x}O)(R^{y}O)SiO_{2/2}]_{c}' [(R^{y}O)₂SiO_{2/2}]_{c}" [(R^{x}O)₃SiO_{1/2}]_{d} [(R^{x}O)₂(R^{y}O)SiO_{1/2}]_{d}' [(R^{x}O)(R^{y}O)₂SiO_{1/2}]_{d}" [(R^{y}O)₃SiO_{1/2}]_{d}‴ [O_{1/2}R^{z}O_{1/2}]ₑ [O_{1/2}R^{z}OH]ₑ' [O_{1/2}R^{z}OR^{X}]ₑ " [O_{1/2}R^{z}OR^{y}*]ₑ‴** **(I),**

worin
die Indices **a, b, b', c, c', c", d, d', d", d‴, e', e"** und **e‴** unabhängig voneinander eine Zahl im Bereich von 0 bis 5000, vorzugsweise 0 bis 500, bevorzugt 0 bis 20, bedeuten,
der Index **e** eine Zahl im Bereich von 2 bis 5000, vorzugsweise 2 bis 500, bevorzugt 2 bis 100, insbesondere 2 bis 20, bedeutet, mit der Maßgabe, dass die Summe aller Indices mindestens 5 beträgt;
die Reste **R^{x}** unabhängig voneinander ausgewählt sind aus Resten, die mindestens eine der folgenden Bedingungen erfüllen:
   (a) **R^{x}** ist ein Rest der Formel **-CHR^{p}₂** oder **-CR^{p}₃,**
      wobei **R^{p}** unabhängig voneinander einen einwertigen unsubstituierten oder substituierten Kohlenwasserstoffrest mit 1 bis 50 C-Atomen bedeutet,
   (b) **R^{x}** ist ein substituierter oder unsubstituierter, C₅-C₂₀-Kohlenwasserstoffrest, der am β-Kohlenstoffatom zweifach verzweigt ist,
   (c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
die Reste **R^{y}** unabhängig voneinander ein Wasserstoffatom, ein Methyl-, Ethyl-, n-Propyl-, oder n-Butylrest, vorzugsweise einen Methyl- oder Ethylrest, bedeuten;
worin die Reste **OR**^{y} teilweise durch Si-gebundene H-Atome ersetzt sein können;
**R^{y}*** ein Methyl-, Ethyl-, n-Propyl- oder n-Butylrest, vorzugsweise einen Methyl- oder Ethylrest, bedeutet;
die Reste **R^{z}** unabhängig voneinander einen zweiwertigen unsubstituierten oder substituierten über Kohlenstoff gebundenen Rest oder einen zweiwertigen über Silicium gebundenen Rest bedeuten, indem einzelne C- oder Si-Atome durch Sauerstoffatome ersetzt sein können;
mit der Maßgabe, dass die Einheiten **[O_{1/2}R^{z}O_{1/2}]** gebunden sind an zwei Einheiten, unabhängig voneinander ausgewählt aus der Gruppe der Einheiten **[SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}],** [**(R^{y}O)₂SiO_{2/2}],** [**(R^{x}O)₃SiO_{1/2}], [(R^{x}O)₂(R^{y}O)SiO_{1/2}], [(R^{x}O)(R^{y}O)₂SiO_{1/2}]**und [**(R^{y}O)₃SiO_{1/2}]**;
mit der Maßgabe, dass die Einheiten **[O_{1/2}R^{z}OH], [O_{1/2}R^{z}OR^{x}]** und **[O_{1/2}R^{z}OR^{y}*]** gebunden sind an eine Einheit, unabhängig voneinander ausgewählt aus der Gruppe der Einheiten **[SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}];**
mit der Maßgabe, dass der molare Anteil an allen Resten **R^{y}** im polymeren Alkylsilikat höchstens 50 mol%, vorzugsweise höchstens 25 mol%, beträgt, jeweils bezogen auf die molare Menge der Summe an allen Resten **R^{x}**, **R^{y}** und **R^{y}***,
wobei der molare Anteil für den Rest **OR**^{y} gleich Wasserstoff höchstens 33 mol-%, vorzugsweise höchstens 15 mol-%, bevorzugt höchstens 10 mol-%, insbesondere höchstens 9 mol-%, beträgt, jeweils bezogen auf die molare Menge der Summe an allen Resten **OR^{x}** und **OR^{y}**;
und mit der Maßgabe, dass folgende polymere Alkylsilikate, ausschließlich bestehend aus Verbindungen der Formel II, ausgeschlossen sind: 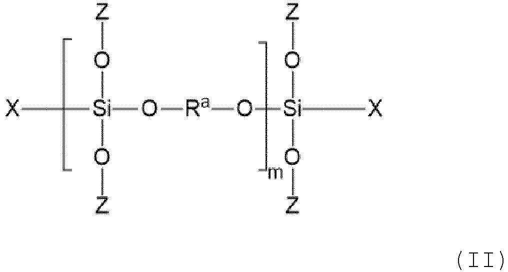 wobei
   - **Z**: einen Rest der Formel -Si(OR^{b})₃ oder einen Rest der Formel -CR^{c}₃ bedeutet,
   - **R^{a}**: unabhängig voneinander einen zweiwertigen unsubstituierten oder substituierten über Kohlenstoff gebundenen Rest oder einen zweiwertigen über Silicium gebundenen Rest bedeutet,
   - **R^{b}**: unabhängig voneinander einen einwertigen unsubstituierten oder substituierten Kohlenwasserstoffrest mit 4 bis 40 C-Atomen bedeutet, der am α-Kohlenstoffatom verzweigt ist oder am β-Kohlenstoffatom zweifach verzweigt ist,
   - **R^{c}**: unabhängig voneinander einen einwertigen unsubstituierten oder substituierten Kohlenwasserstoffrest mit 1 bis 50 C-Atomen, vorzugsweise 1 bis 10 C-Atomen, bevorzugt 1 bis 5 C-Atomen, bedeutet,
   - **X**: ein Halogenatom, einen über Sauerstoffgebundenen unsubstituierten oder substituierten C₁- bis C₄₀-Kohlenwasserstoffrest, wobei einzelne Kohlenstoffatome durch Sauerstoffatome ersetzt sein können, einen Rest der Formel -O-Si(OR^{b})₃ oder einen Rest der Formel -OSiRⁿ₃ bedeutet,
   - **Rⁿ**: unabhängig voneinander einen einwertigen unsubstituierten oder substituierten C₁- bis C₄₀-Kohlenwasserstoffrest bedeutet und
   - **m**: eine ganze Zahl von mindestens 2, vorzugsweise mindestens 5 und höchstens 1000, vorzugsweise höchstens 500, bevorzugt höchstens 100, bedeutet.

Vorzugsweise enthält die Mischung aus polymeren Alkylsilikaten keine SiC-gebundenen Reste.

Der Begriff "zweifach verzweigt" bedeutet, dass sich an einem Kohlenstoffatom drei Kohlenstoffreste befinden.

Der molare Anteil an allen Resten **R^{y}** in den polymeren Alkylsilikaten beträgt vorzugsweise mindestens 0 mol%, bevorzugt mindestens 0,01 mol% und besonders bevorzugt mindestens 0,1 mol%, jeweils bezogen auf die molare Menge der Summe an allen Resten **R^{x}**, **R^{y}** und **R^{y}***.

Die Reste RP, R^{x}, R^{z} und können acyclisch, cyclisch, gesättigt oder ein- oder mehrfach ungesättigt oder aromatisch sein.

Die Reste RP, R^{x} und R^{z} können außerdem folgende Substitutionen aufweisen:
Vinylrest, Ethinylrest, -OR¹, -NR¹₂, -SH, -SR¹, Epoxygruppe, -COOR¹, -CHO, -CN, -OCOOR², -NR¹-COOR¹, -NR¹-CO-NR¹, -SiR¹₃ und -OSiR₃¹, wobei
- R¹: ein Wasserstoffatom oder einen einwertigen C₁- bis C₁₈-Kohlenwasserstoffrest bedeutet und
- R²: einen einwertigen C₁- bis C₁₈-Kohlenwasserstoffrest bedeutet.

Bevorzugt ist der Rest **R^{x}** ein Rest der Formel **-CHR^{p}₂** oder **-CR^{p}₃,** wobei **R^{p}** unabhängig voneinander einen einwertigen unsubstituierten oder substituierten Kohlenwasserstoffrest mit 1 bis 50 C-Atomen, vorzugsweise 1 bis 10 C-Atomen, bevorzugt 1 bis 6 C-Atomen, bedeutet.

Bevorzugte Beispiele für Reste **R^{x}** sind der tert. Butyl-, 2-Butylrest, 3-Methyl-2-butyl, 3-Methyl-2-pentyl, 3-Pentylrest, 2-Hexylrest, 3-Hexylrest, 2-Heptylrest, 2-Octylrest, 1-Phenylethylrest, der 1-Phenyl-1-propylrest, 2,2-Dimethyl-1-propylrest und 1,1-Dimethylpropylrest.

Beispiele für substituierte Reste **R^{x}** sind

-C(CH₃)₂-CH₂-NH₂, -CH(CH₃)-CH₂-NH₂, -CH(C₂H₅)-CH₂-NH₂,

-C(CH₃)₂-CH₂-NH-CH₂-CH₂-NH₂, -CH(CH₃)-CH₂-NH-CH₂-CH₂-NH₂,

-CH(C₂H₅)-CH₂-NH-CH₂-CH₂-NH₂,

-C(CH₃)₂-CH=CH₂, -CH(CH₃)-CH=CH₂, -CH(C₂H₅)-CH=CH₂,

-C(CH₃)₂-C≡CH, -CH(CH₃)-C≡CH und -CH(C₂H₅)-C≡CH.

R^{z} bedeutet unabhängig voneinander vorzugsweise einen zweiwertigen Kohlenwasserstoffrest mit 3 bis 200 Kohlenstoffatomen, bevorzugt mit 3 bis 50 Kohlenstoffatomen, wobei die Kohlenstoffatome durch Sauerstoffatome oder durch Siloxanylreste der Formel -(R³₂SiO)ₒ-SiR³₂- ersetzt sein können, wobei
- R³: unabhängig voneinander einen C₁- bis C₂₀-Kohlenwasserstoffrest, bevorzugt einen C₁- bis C₆-Kohlenwasserstoffrest, bedeutet und
- o: eine ganze Zahl von 0 bis 100, bevorzugt 1 bis 20, ist.

Beispiele für Reste R^{z} sind der 1,3-Propylen-, 1,4-Butylen-, 1,2-Cyclohexyliden-, 1,3-Cyclohexyliden-, 1,4-Cyclohexyliden-, 1,2-Phenylen-, 1,3-Phenylen- und 1,4-Phenylen-rest sowie Reste der Formeln

-CR⁴₂-CR⁴₂-(OCR⁴₂-CR⁴₂)ₚ-,

-CR⁴₂-(CR⁴₂)_{q}-(OCR⁴₂-(CR⁴₂)_{q})ₚ-,

- (Me₂SiO)ₒ-Me₂Si-,

-CH₂-CH₂-CH₂-(Me₂SiO)ₒ-Me₂Si-CH₂-CH₂-CH₂-,

-CH₂-CH₂-(Me₂SiO)ₒ-Me₂Si-CH₂-CH₂- und

-CH₂-(Me₂SiO)ₒ-Me₂Si-CH₂-,

wobei
- Me: ein Methylrest ist,
- R⁴: gleich oder verschieden sein kann und ein Wasserstoffatom oder einen C₁- bis C₁₈-Kohlenwasserstoffrest, bevorzugt ein Wasserstoffatom oder einen Methylrest, bedeutet,
- o: eine ganze Zahl von 0 bis 100, bevorzugt 1 bis 20, ist,
- p: eine ganze Zahl von 0 bis 100, bevorzugt 1 bis 20, ist und
- q: eine ganze Zahl von 1 bis 100, bevorzugt 1 bis 50, ist.

Bevorzugte Beispiele für Reste R^{z} sind Reste der Formel -CH(CH₃)-CH₂-O-CH₂-CH(CH₃)-, -CH₂-CH(CH₃)-O-CH(CH₃)-CH₂-, -CH(CH₃)-CH₂-O-CH(CH₃)-CH₂- und -CH₂-CH₂-O-CH₂-CH₂-.

In der erfindungsgemäßen Mischung aus polymeren Alkylsilikaten enthalten die polymeren Alkylsilikate mindestens 2, vorzugsweise mindestens 3, bevorzugt mindestens 4, Strukturelemente ausgewählt aus der Gruppe der Formeln 1 bis 10 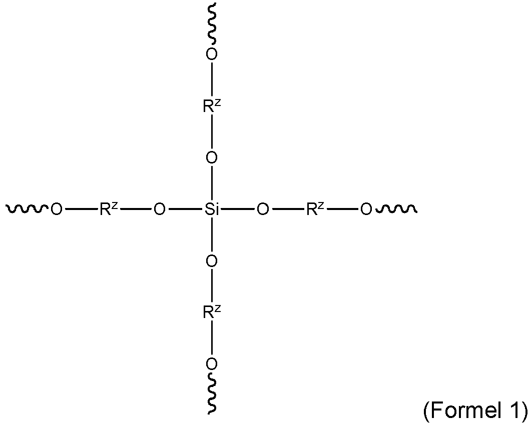 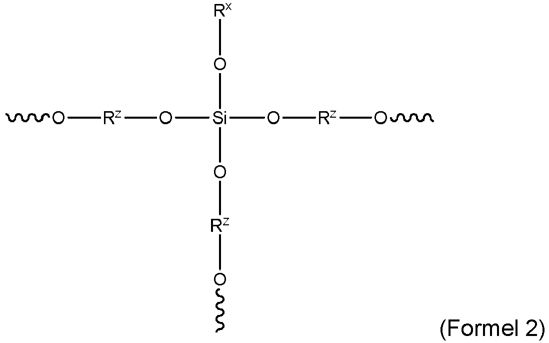 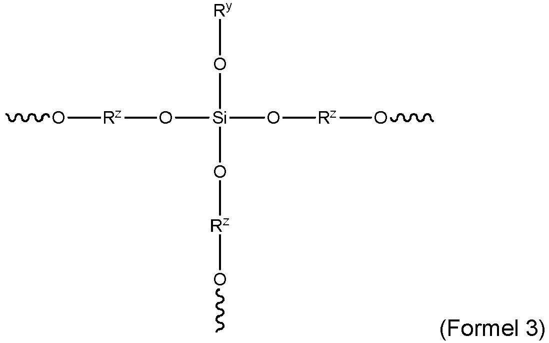 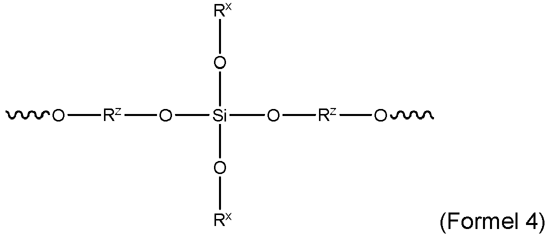 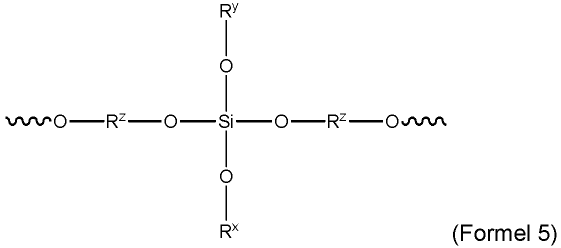 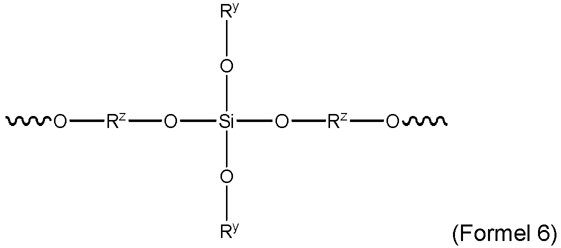 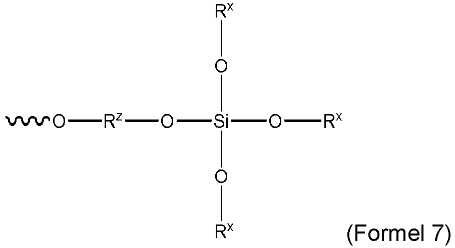 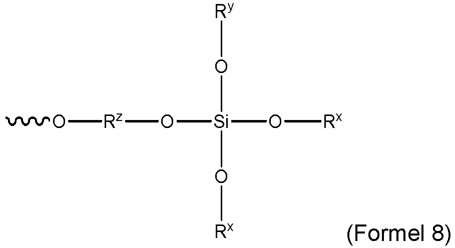 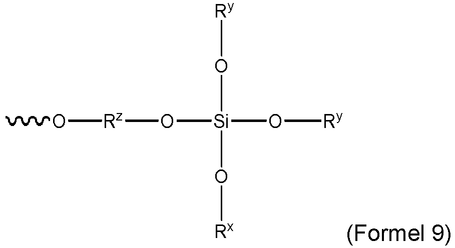 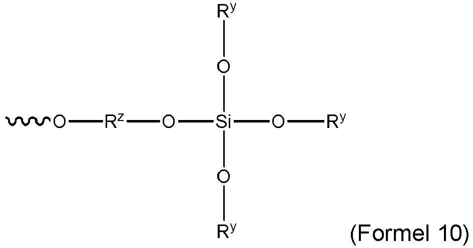 mit der Maßgabe, dass die Summe der Anzahl an Struktureinheiten der Formeln 1 + 2 + 3 + 5 + 6 weniger als 60%, vorzugsweise weniger als 50%, bevorzugt weniger als 35% und besonders bevorzugt weniger als 20%, und vorzugsweise mindestens 0,1%, bevorzugt mindestens 0,5%, insbesondere mindestens 1%, besonders bevorzugt mindestens 5% und insbesondere bevorzugt mindestens 10%, jeweils bezogen auf die Summe der Anzahl aller Struktureinheiten, beträgt und mit der Maßgabe, dass wenn eine Struktureinheit der Formel 4 mit **R^{x}** in der Bedeutung von **-CR^{p}₃** enthalten ist, mindestens eine weitere Struktureinheit ausgewählt aus der Gruppe der Formeln 1, 2, 3, 5, 6, 9 und 10 enthalten ist, wobei RP, R^{x}, R^{y} und R^{z} die oben dafür angegebene Bedeutung haben.

Die polymeren Alkylsilikate können auch Strukturelemente ausgewählt aus der Gruppe der Formeln 11 bis 15 enthalten, Formeln 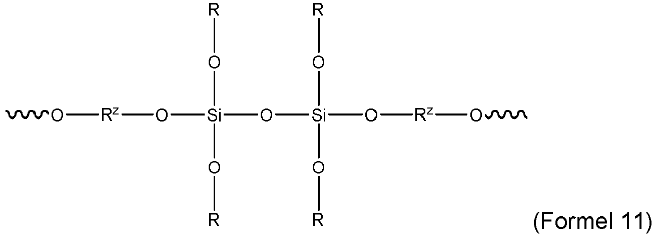 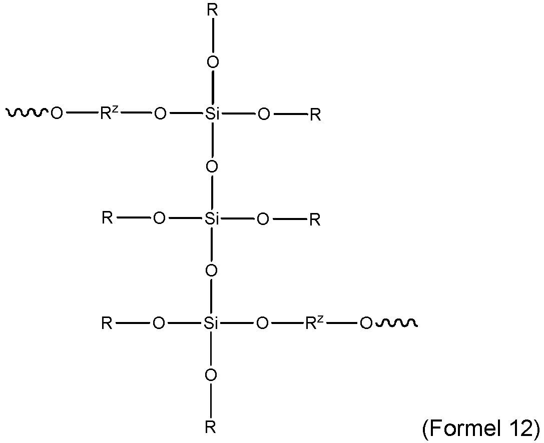 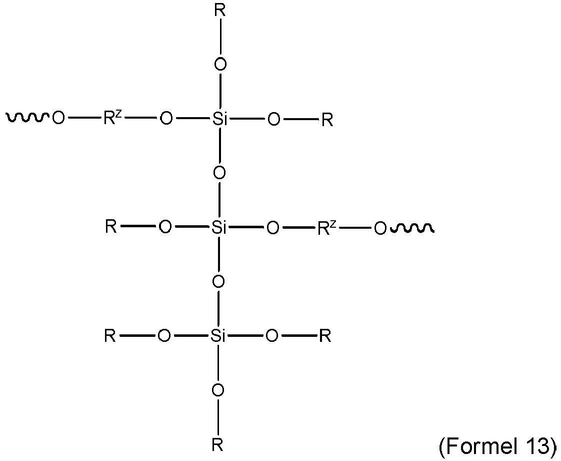 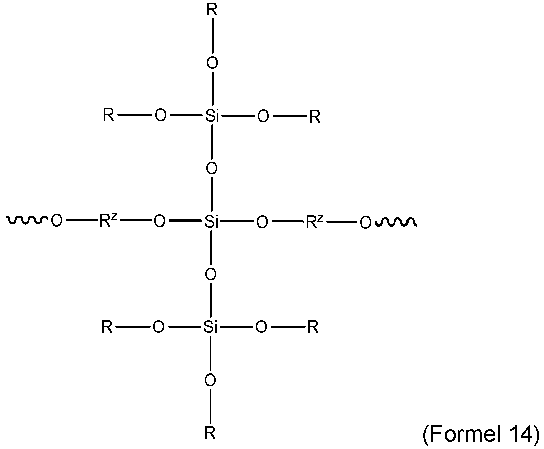 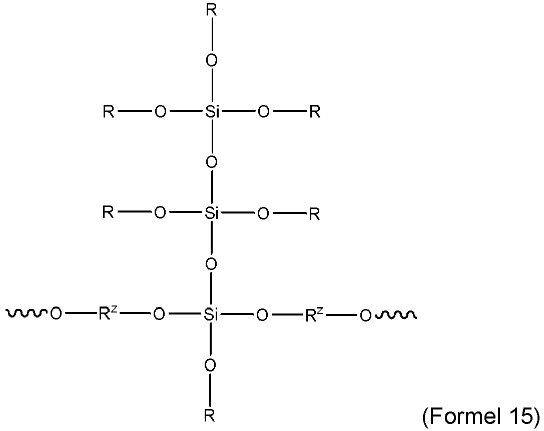
mit der Maßgabe, dass der Rest **R** unabhängig ausgewählt wird aus Resten von **R^{x}** und **R^{y}**,
und mit der Maßgabe, dass wenn die Struktureinheit der Formel 14 enthalten ist und R ein Rest der Formel **-CR^{p}₃** ist, mindestens eine weitere Struktureinheit der Formeln 11, 12, 13 oder 15 enthalten sein muss,
wobei **Rp**, **R^{x}** und **R^{y}** die oben dafür angegebene Bedeutung haben.

Gegenstand der Erfindung ist weiterhin ein Verfahren zur Herstellung der Mischung aus polymeren Alkylsilikaten der Formel (I) indem

Silane (1), ausgewählt aus der Gruppe von Tetrachlorsilan (1a), Tetraalkoxysilan (1b), Teilhydrolysate von Tetrachlorsilan, Teilhydrolysate von Tetraalkoxysilan und deren Mischungen,
ggf. unter Zusatz von Lösungsmitteln (7),
mit Monohydroxyverbindungen (2) der Formel

   **HO-R^{x}**,
ggf. unter Zusatz von primären Alkoholen (3) der Formel **HO-R^{y}** und/oder
ggf. unter Zusatz von Wasser (4),
und mit Dihydroxyverbindungen (5) der Formel

   **HO-R^{z}-OH**
oder deren Salze
ggf. in Gegenwart von Katalysatoren (6),
gleichzeitig in einem Schritt oder nacheinander in zwei Schritten, vorzugsweise nacheinander in zwei Schritten, umgesetzt werden,
mit der Maßgabe, dass wenn SiCl₄ (1a) mit Monohydroxyverbindungen (2) der Formel **HO-R^{x}**, bei der **R^{x}** ein Rest der Formel **-CR^{p}₃** ist, umgesetzt wird,
dem Reaktionsgemisch mindestens eine weitere Verbindung ausgewählt aus der Gruppe bestehend aus Monohydroxyverbindungen (2) der Formel **HO-R^{x}**, bei der **R^{x}** die oben dafür angegebene Bedeutung hat, aber kein Rest der Formel **-CR^{p}₃** ist,
primären Alkoholen (3) der Formel **HO-R^{y},**
Wasser (4) und deren Mischungen zugegeben wird,
und mit der Maßgabe, dass Monohydroxyverbindungen (2) und primäre Alkohole (3) in Mengen von 1,0 bis 3,0 Mol, vorzugsweise 1,5 bis 2,5 Mol, je Mol Silan (1) und Dihydroxyverbindungen (5) in Mengen von 0,7 bis 1,5 Mol, vorzugsweise 0,9 bis 1,1 Mol, je Mol Silan (1) eingesetzt werden,
wobei **R^{p}, R^{x}**, **R^{y}** und **R^{z}** die oben dafür angegebene Bedeutung haben.

Bevorzugt ist ein Verfahren zur Herstellung der Mischung aus polymeren Alkylsilikaten der Formel (I) indem
Silane (1), ausgewählt aus der Gruppe von Tetrachlorsilan (1a), Tetraalkoxysilan (1b), Teilhydrolysate von Tetrachlorsilan, Teilhydrolysate von Tetraalkoxysilan und deren Mischungen,
ggf. unter Zusatz von Lösungsmitteln (7),
mit sekundären Alkoholen (2a) oder tertiären Alkoholen (2b) der Formel

   **HO-R^{x}**,
wobei **R^{x}** ein Rest der Formel **-CHR^{p}₂** oder **-CR^{p}₃** bedeutet,
ggf. unter Zusatz von primären Alkoholen (3) der Formel **HO-R^{y}** und/oder
ggf. unter Zusatz von Wasser (4),
und mit Dihydroxyverbindungen (5) der Formel

   **HO-R^{z}-OH**
oder deren Salze
ggf. in Gegenwart von Katalysatoren (6),
gleichzeitig in einem Schritt oder nacheinander in zwei Schritten umgesetzt werden,
mit der Maßgabe, dass wenn SiCl₄ (1a) mit einem tertiären Alkohol (2b) **HO-R^{x}** umgesetzt wird, wobei **R^{x}** dabei einen Rest der Formel **-CR^{p}₃** bedeutet, dem Reaktionsgemisch mindestens eine weitere Verbindung ausgewählt aus der Gruppe bestehend aus sekundären Alkoholen (2a) **HO-R^{x}**, wobei **R^{x}** dabei ein Rest der Formel **-CHR^{p}₂** ist,
primären Alkoholen (3) **HO-R^{y}**,
Wasser (4) und deren Mischungen zugegeben wird,
und mit der Maßgabe, dass Alkohole der Formeln **HO-R^{x}** und **HO-R^{y}** in Mengen von 1,0 bis 3,0 Mol, vorzugsweise 1,5 bis 2,5 Mol, je Mol Silan (1) und Dihydroxyverbindungen (5) in Mengen von 0,7 bis 1,5 Mol, vorzugsweise 0,9 bis 1,1 Mol, je Mol Silan (1) eingesetzt werden,
wobei **R^{p}, R^{x}, R^{y}** und **R^{z}** die oben dafür angegebene Bedeutung haben.

Besonders bevorzugt ist ein Verfahren zur Herstellung der Mischung aus polymeren Alkylsilikaten der Formel (I) indem
in einem ersten Schritt
Silane (1), ausgewählt aus der Gruppe von Tetrachlorsilan (1a), Tetraalkoxysilan (1b), Teilhydrolysate von Tetrachlorsilan, Teilhydrolysate von Tetraalkoxysilan und deren Mischungen,
ggf. unter Zusatz von Lösungsmitteln (7),
mit sekundären Alkoholen (2a) oder tertiären Alkoholen (2b) der Formel

   **HO-R^{x}**,
wobei **R^{x}** ein Rest der Formel **-CHR^{p}₂** oder **-CR^{p}₃** bedeutet,
ggf. unter Zusatz von primären Alkoholen (3) der Formel **HO-R^{y}** und/oder
ggf. unter Zusatz von Wasser (4),
umgesetzt werden und
in einem zweiten Schritt die aus dem ersten Schritt erhaltenen Reaktionsgemische
mit Dihydroxyverbindungen (5) der Formel

   **HO-R^{z}-OH**
oder deren Salze
ggf. in Gegenwart von Katalysatoren (6) und
ggf. unter Zusatz von Lösungsmitteln (7)
umgesetzt werden,
mit der Maßgabe, dass wenn SiCl₄ (1a) mit einem tertiären Alkohol (2b) **HO-R^{x}** umgesetzt wird, wobei **R^{x}** dabei einen Rest der Formel **-CR^{p}₃** bedeutet, dem Reaktionsgemisch mindestens eine weitere Verbindung ausgewählt aus der Gruppe bestehend aus sekundären Alkoholen (2a) **HO-R^{x}**, wobei **R^{x}** dabei ein Rest der Formel **-CHR^{p}₂** ist,
primären Alkoholen (3) **HO-R^{y},**
Wasser (4) und deren Mischungen zugegeben wird,
und mit der Maßgabe, dass Alkohole der Formeln **HO-R^{x}** und **HO-R^{y}** in Mengen von 1,0 bis 3,0 Mol, vorzugsweise 1,5 bis 2,5 Mol, je Mol Silan (1) und Dihydroxyverbindungen (5) in Mengen von 0,7 bis 1,5 Mol, vorzugsweise 0,9 bis 1,1 Mol, je Mol Silan (1) eingesetzt werden,
wobei **R^{p}, R^{x}**, **R^{y}** und **R^{z}** die in Anspruch 1 dafür angegebene Bedeutung haben.

Das erfindungsgemäße Verfahren wird vorzugsweise in zwei Schritten durchgeführt. Hierbei wird in einem ersten Schritt vorzugsweise das Silan (1), wie Tetrachlorsilan (1a), vorgelegt und die Monohydroxyverbindung (2), ggf. primärer Alkohol (3) und ggf. Wasser (4) zugegeben. Der bei Einsatz von Tetrachlorsilan entstehende Chlorwasserstoff wird abgeführt.

In einem zweiten Schritt wird vorzugsweise das Silangemisch aus dem ersten Schritt, wie Chloralkoxysilangemisch, vorgelegt, ggf. mit Lösungsmittel (7) verdünnt und Dihydroxyverbindung (5) und ggf. Katalysator (6) zugegeben. Der entstehende Chlorwasserstoff wird abgeführt.

Die Abführung des gebildeten Chlorwasserstoff erfolgt vorzugsweise mithilfe eines während der Reaktion durchgeleiteten Stromes von Inertgas, wie Argon.

Nach erfolgter Umsetzung am Ende des zweiten Schrittes wird das ggf. eingesetzte Lösungsmittel (7) entfernt, bevorzugt destillativ.

Als Katalysatoren (6) werden bei dem erfindungsgemäßen Verfahren vorzugsweise Stickstoffbasen eingesetzt, bevorzugt solche Stickstoffbasen ausgewählt aus der Gruppe bestehend aus Pyridin, Ammoniak, Harnstoff, Ethylendiamin, Triethylamin, Tributylamin und deren Mischungen.

Katalysatoren (6) werden bei dem erfindungsgemäßen Verfahren vorzugsweise in Mengen von 1 bis 70 Gew.-%, bevorzugt 5 bis 55 Gew.-%, jeweils bezogen auf das Gesamtgewicht der Komponenten (1) bis (5) eingesetzt.

Das erfindungsgemäße Verfahren kann in Gegenwart eines oder mehrerer Lösungsmittel durchgeführt werden.

Wenn Lösungsmittel (7) bei dem erfindungsgemäßen Verfahren eingesetzt werden, werden sie vorzugsweise im zweiten Verfahrensschritt eingesetzt.

Beispiele für Lösungsmittel (7) sind Kohlenwasserstoffe wie Toluol, Hexan, Isohexan, Pentan, Ether wie Methyl-tert-butylether und Siloxane, wie Hexamethyldisiloxan, Octamethyltrisiloxan und(Me₃SiO)₄Si (mit Me=Methylrest). Lösungsmittel (7) werden vorzugsweise in Mengen von 10 bis 200 Gew.-%, bevorzugt 50 bis 100 Gew.-%, jeweils bezogen auf das Gesamtgewicht der Komponenten (1) bis (5) eingesetzt.

Lösungsmittel (7) werden vorzugsweise nach der Umsetzung am Ende des Verfahrens entfernt. Bevorzugt werden sie destillativ entfernt.

Als Silane (1) werden vorzugweise Tetrachlorsilan, Tetraethoxysilan und deren Teilhydrolysate eingesetzt. Bevorzugt wird Tetrachlorsilan (1a) eingesetzt.

Bevorzugte Beispiele für sekundäre Alkohole (2a) sind 2-Butanol und Isopropanol.

Ein bevorzugtes Beispiel für tertiäre Alkohole (2b) ist tert.-Butanol.

Ein bevorzugtes Beispiel für primäre Alkohole (3) ist Methanol.

Beispiele für Dihydroxyverbindungen (5) sind Ethylenglycol, Propylenglycol, 1,3-Propandiol, 1,4-Butandiol, 2,4-Pentandiol, 1,2-Cyclohexandiol, 1,3-Cyclohexandiol, 1,4-Cyclohexandiol, 1,2-Dihydroxybenzol, 1,3-Dihydroxybenzol, 1,4-Dihydroxybenzol, Diethylenglycol, Dipropylenglycol, Polyethylenglycol, Polypropylenglycol,

HO-(Me₂SiO)ₒ-Me₂Si-OH,

HO-CH₂-CH₂-CH₂-(Me₂SiO)ₒ-Me₂Si-CH₂-CH₂-CH₂-OH,

wobei o eine ganze Zahl von 1 bis 20 und Me ein Methylrest ist.

Bevorzugte Beispiele für Dihydroxverbindungen (5) sind Diethylenglycol und Dipropylenglycol.

Das erfindungsgemäße Verfahren kann diskontinuierlich, halbkontinuierlich oder kontinuierlich durchgeführt werden.

Das erfindungsgemäße Verfahren wird bei einer Temperatur von vorzugsweise 20 bis 200°C, bevorzugt 60 bis 160°C, durchgeführt. Es kann beim Druck der umgebenden Atmosphäre (ca. 1020hPa) oder bei höheren oder niedrigeren Drücken durchgeführt werden. Bevorzugt wird es bei dem Druck der umgebenden Atmosphäre durchgeführt.

Die Mischung aus polymeren Alkylsilikaten der Formel (I) kann auch polymere Alkylsilikate mit Si-gebundenem Wasserstoff enthalten.

Gegenstand der Erfindung ist daher ein weiteres Verfahren zur Herstellung einer Mischung aus polymeren Alkylsilikaten der Formel (I), indem
Verbindungen der Formel

**Si(H)₁(OR^{x})ₖ(OR^{y})ⱼ**

und/oder deren Teilhydrolysate,
wobei
der Index l 1, 2, 3 oder 4, bevorzugt von 1 oder 2, bedeutet, und die Indices k und j unabhängig voneinander 0, 1, 2 oder 3 bedeuten,
mit der Maßgabe, dass die Summe aus l + k + j gleich 4 ist,
mit Dihydroxyverbindungen (5) der Formel

   **HO-R^{z}-OH**
ggf. in Gegenwart eines Katalysators (6) und
ggf. unter Zugabe eines Lösungsmittels (7)
unter Abspaltung von Wasserstoff umgesetzt werden,
wobei **R^{x}, R^{y}** und **R^{z}** die oben dafür angegebene Bedeutung haben.

Die erfindungsgemäßen polymeren Alkylsilikate können weiterverarbeitet werden, beispielsweise unter Vernetzung zu Elastomeren und dort eingesetzt werden, wo Silicone eingesetzt werden, beispielsweise in den Bereichen Hydrophobierung, Anti-Schaum, Textil, Kosmetik, Bautenschutz sowie Personal- und Household-Care.

### Beispiele 1 bis 12 und Vergleichsbeispiel

### Messmethoden

1) Die Viskosität wurde mit einem Stabinger Rotationsviskosimeter SVM3000 der Fa. Anton Paar bei 25°C durchgeführt.
2) Die massenmittlere Molmasse M_{w} kann ebenso wie die zahlenmittlere Molmassen Mₙ mittels Size Exclusion Chromatography (SEC) gegen Polydimethylsiloxan-Standards in Toluol bei 35°C, Flow Rate 0,7 ml/min und Detektion mit RI (Brechungsindex-Detektor) auf einem Säulenset Meso Pore - Oligo Pore (Fa. Agilent, Deutschland) mit einem Injektionsvolumen von 10 µl bestimmt werden.
3) Die Umsatzkontrollen der unten aufgeführten Beispiele erfolgte mittels Kernresonanzspektroskopie (²⁹Si-NMR; Bruker Avance III HD 500 (²⁹Si: 99.4 MHz) Spektrometer mit BBO 500 MHz S2 Probenkopf; inverse gated-Pulssequenz (NS = 3000). 150 mg der Probe wurden in 500 µl einer 4*10⁻² molaren Lösung von Cr(acac)₃ in CD₂Cl₂ aufgenommen. Bei der Nutzung von sekundären Alkoholen entstehen Gemische aus Chloralkoxysilanen, enthaltend Si(Cl)₃(OR), Si(Cl)₂(OR)₂, Si(Cl)(OR)₃ sowie Si(OR)₄. Aus den Signalintensitäten kann eine mittlere Summenformel berechnet werden, indem die relativen Signalintensitäten der einzelnen Chloralkoxysilane mit dem - in den jeweiligen Chloralkoxysilanen enthaltenen Cl/Si- bzw. OR/Si-Verhältnis multipliziert und über die vier Spezies gemittelt werden, wie nachfolgend an den Beispielen 1-4 demonstriert.
4) Zur Identifikation einzelner Moleküle und enthaltener Strukturmotive wurde das Material aus Beispiel 6 mittels MALDI-TOF analysiert. MALDI-TOF Messungen wurden mit einem Bruker Autoflex Speed MALDI-TOF/TOF Massenspektrometer durchgeführt. Die Messung erfolgte linear im positiven Modus mit einem Nd:YAG Laser bei 355 nm. Der erfasste Massenbereich für den positiven Modus war m/z 500-5000. Die Kalibration in diesem Massenbereich erfolgte mit Polyethylenglykol.

Als Matrix wurde THAP (2',4',6'-Trihydroxyacetophenon, 5mg/mL gelöst in 70% Acetonitril, 30% Wasser, 0.1% Ameisensäure) verwendet und mit 5 mg der Probe vermischt. NaI (5 mg/ml) und KI (5 mg/mL) gelöst in Methanol wurden zur Ionisierung zugesetzt.

Die Probe wurde in der Dünnschichttechnik aufgetragen.

Siehe die Strukturmotive anhand von MALDI-TOF-Untersuchungen am Produkt von Beispiel 6.

**Tabelle 1: Zusammensetzung und mittlere Summenformel des Reaktionsproduktes nach Beispielen 1, 2 und Vergleichsbeispiel**

| Alkoxychlorsilane | Beispiel 1 Gehalt [%] | Beispiel 2 Gehalt [%] | Vergleichsbeispiel Gehalt [%] |
|---|---|---|---|
| Si(Cl)₃(OR) | 15,8 | 12,0 | 0,0 |
| Si(Cl)₂(OR)₂ | 65,7 | 58,8 | 100 |
| Si(Cl)(OR)₃ | 18,2 | 28,8 | 0,0 |
| Si(OR)₄ | 0,3 | 0,4 | 0,0 |
| Mittl. Summenformel | Si(Cl)_{1,97}(O-2-Bu)_{2,03} | Si(Cl)_{1,82}(O-2-Pr)_{2,18} | Si(Cl)_{2,00}(O-tBu)_{2,00} |

Bei der Verwendung einer Mischung verschiedener Alkohole - wie im Beispiel 3 - werden gemischte Chloralkoxysilane erhalten, so z.B. neben Si(Cl)₃(O-2-Bu) auch Si(Cl)₃(O-Me) - bei den anderen Chloralkoxysilanen werden analoge Permutationen beobachtet. Für die Berechnung der mittleren Summenformel werden die Signalintensitäten der jeweiligen Gruppen (Monoalkoxytrichlorsilane, Dialkoxydichlorsilane, Trialkoxychlorsilane und Tetraalkoxysilane) addiert und anschließend analog wie im oben gezeigten Beispiel miteinander verrechnet. Im Gegenzug hierzu führt die Umsetzung von Tetrachlorsilan mit zwei Äquivalenten eines tertiären Alkohols (z.B. tert. Butanol) zur Bildung einer einzigen Verbindung, dem Dialkoxydichlorsilan.

**Tabelle 2: Zusammensetzung und mittlere Summenformel des Reaktionsproduktes nach Beispielen 3 - 5.**

| Alkoxychlorsilane* | Beispiel 3 Gehalt [%] | Beispiel 4 Gehalt [%] | Beispiel 5 Gehalt [%] |
|---|---|---|---|
| Si(Cl)₃(OR¹) | 3,19 | - | - |
| Si(Cl)₃(OR²) | 18,52 | 12, 98 | - |
| Si(Cl)₂(OR¹)₂ | 6,50 | - | - |
| Si(Cl)₂(OR¹)(OR²) | 21,57 | 5,65 | 1,5 |
| Si(Cl)₂(OR²)₂ | 7,91 | 50, 61 | 97, 2 |
| Si(Cl)(OR¹)₃ | 4,01 | - | 2,0 |
| Si(Cl)(OR¹)₂(OR²) | 19, 34 | - | - |
| Si(Cl)(OR¹)(OR²)₂ | 17,24 | 14, 66 | - |
| Si(Cl)(OR²)₃ | 1,13 | 14,79 | - |
| Si(OR¹)₄ | - | - | 1,0 |
| Si(OR¹)₃(OR²) | - | - | - |
| Si(OR¹)₂(OR²)₂ | 0,19 | 0,47 | - |
| Si(OR¹)(OR²)₃ | 0,25 | 0,56 | - |
| Si(OR²)₄ | 0,15 | 0,27 | - |
| Mittl. Summenformel | Si(Cl)_{1,79}(OR)_{2,21} (43,2% OMe) | Si(Cl)_{1,81}(OR)_{2,19} (10,58% OMe) | Si(Cl)_{1,98}(OR)_{2,02} (5,54% OMe) |

| | | | |
|---|---|---|---|
| *OR¹ beschreibt je nach Beispiel den Methoxy-Rest, OR² beschreibt in diesen Beispielen entweder den 2-Bu-O oder tert.-Butoxy-Rest. | | | |

### Allgemeiner Aufbau der Apparatur zur Alkoxylierung von Tetrachlorsilan zur Erzeugung der Chloralkoxysilane (CAS) aus den Beispielen 1 - 5 sowie dem Vergleichsbeispiel

Ein 4l-Dreihalskolben wird mit einem KPG-Rührer, einem 1l-Tropftrichter ohne Druckausgleich (ausgestattet mit einer Olive) und einer Olive ausgestattet. Der Kolben wird über die Olive mit einer leeren Sicherheitswaschflasche sowie einem nachgeschalteten, mit NaOH befüllten, Abgaswäscher verbunden. Die gesamte Apparatur wird in einem Abzug mit Neutralisationsanlage durchgeführt und vor der Befüllung mit Argon geflutet (Die Argon-Zugabe erfolgt über den Tropftrichter), der Reaktionskolben wird auf 0°C gekühlt. Das Tetrachlorsilan wird vorgelegt und über den Tropftrichter der entsprechende Alkohol (sowie zuvor hergestellte Mischungen von Alkoholen) langsam zudosiert. Während der Dosierung wird ein konstanter Strom an Argon durch die Anlage geleitet, um das entstehende Chlorwasserstoffgas aus der Gasphase zu entfernen. Die Mischung wird anschließend auf Raumtemperatur erwärmt und für zwei Stunden bei dieser Temperatur gerührt.

Bei der Verwendung von tert.-Butanol wird der Feststoff zunächst in Toluol (1 Gew.-Teil tert.-Butanol auf 2 Gew.-Teile Toluol) gelöst.

### Allgemeiner Aufbau der Apparatur zur Umsetzung der Chloralkoxysilane (CAS) mit organischen Diolen gemäß den Beispielen 6 bis 12

Ein 2L-Dreihalskolben wird mit einem KPG-Rührer, einem 1L-Tropftrichter mit Druckausgleich (ausgestattet mit einer Olive) und einem Rückflusskühler mit Olive ausgestattet. Die Apparatur wird über die Olive mit einer leeren Sicherheitswaschflasche sowie einem nachgeschalteten, mit NaOH befüllten, Abgaswäscher verbunden. Die gesamte Apparatur wird in einem Abzug mit Neutralisationsanlage durchgeführt und vor der Befüllung mit Argon geflutet (Die Argon-Zugabe erfolgt über den Tropftrichter). Das Chloralkoxysilan-Gemisch wird vorgelegt und mit Toluol verdünnt. Über den Tropftrichter wird ein Gemisch aus dem ausgewählten Diol und Pyridin langsam zudosiert (der Reaktionskolben wird dabei, je nach Beispiel, zunächst auf die in Tabelle 3 angegebene Temperatur erwärmt). Während der Dosierung wird ein konstanter Strom an Argon durch die Anlage geleitet, um das entstehende Chlorwasserstoffgas aus der Gasphase zu entfernen. Die Mischung wird nach erfolgter Zugabe bei der Reaktionstemperatur für zwei Stunden bei unverändertem Argon-Strom gerührt, auf Raumtemperatur gebracht und über einen Faltenfilter filtriert. Das anhaftende Toluol wird am Rotationsverdampfer bei 60°C und 100 mbar entfernt.

Eine Zusammenfassung der in den Beispielen verwendeten Edukte und deren Einwaagen zur Erzeugung der Chloralkoxysilane (CAS) ist der Tabelle 3 zu entnehmen.

**Tabelle 3: Einwaagen, Dosiergeschwindigkeiten und mittlere Summenformeln der Umsetzungen von Tetrachlorsilan mit verschiedenen Alkoholen bzw. Gemischen.**

| Beispiele* | Einwaage SiCl₄ [g] | Alkohol/Einwaage [g] | Dosierdauer [Stunden] | Mittlere Summenformel |
|---|---|---|---|---|
| Beispiel 1 | 1600 | 2-Butanol / 1310 | 6,0 | Si(Cl)_{1,97}(OR)_{2,03} |
| Beispiel 2 | 600 | Isopropanol / 425 | 2,5 | Si(Cl)_{4,32}(OR)_{2,18} |
| Beispiel 3 | 401 | 2-Butanol / 175 | 2,0 | Si(Cl)_{1,79}(OR)_{2,21} |
| | | Methanol / 76 | | |
| Beispiel 4 | 401 | 2-Butanol / 314 | 2,0 | Si(Cl)_{1,81}(OR)_{2,19} |
| | | Methanol / 15 | | |
| Beispiel 5 | 401 | Tert.-Butanol / 341 | 2,0 | Si(Cl)_{1,96}(OR)_{2,04} |
| | | Methanol / 5 | | |
| Vergleichsbeispiel | 21 | Tert.-Butanol / 19 | 0,5 | Si(Cl)_{2,00}(OR)_{2,00} |

| | | | | |
|---|---|---|---|---|
| *Für die Beispiel 1 - 4 wird die Bildung von Trichloralkoxysilanen, Dichlordialkoxysilanen, Chlortrialkoxysilanen und Tetraalkoxysilanen beobachtet. In den Beispielen 3 und 4 wurden die Alkohole vor der Zugabe über den Tropftrichter gemischt. Das Vergleichsbeispiel zeigt hingegen nur ein Singulett des Dichlordialkoxysilans. Die Beispiele 2 - 5 wurden in 2 L Dreihalskolben und das Vergleichsbeispiel in einem 100 mL Dreihalskolben durchgeführt. | | | | |

Die Einwaagen für die weiterführenden Umsetzungen der Chloralkoxysilane (CAS) mit organischen Diolen sind der Tabelle 4 zu entnehmen.

**Tabelle 4: Einwaagen und Reaktionstemperaturen der Umsetzungen der Chloralkoxysilane mit organischen Diolen.**

| Beispiele | Diol/ Einwaage [g] | CAS/ Einwaage [g] | Einwaage Pyridin [g] | Volumen Toluol [ml] | Temp. [°C] |
|---|---|---|---|---|---|
| Beispiel 6 | DPG / 70,815 | Beispiel 1 / 130,001 | 83,953 | 400 | 20 |
| Beispiel 7 | DPG / 70,814 | Beispiel 1 / 129,980 | 83,968 | 430 | 60 |
| Beispiel 8 | DPG / 70,818 | Beispiel 1 / 130,007 | 84,030 | 300 | 150 |
| Beispiel 9 | DPG / 74, 147 | Beispiel 2 / 130,007 | 94,900 | 300 | 20 |
| Beispiel 10 | DPG / 84,280 | Beispiel 3 / 135,000 | 105,120 | 300 | 20 |
| Beispiel 11 | DEG / 68,22 | Beispiel 4 / 150,000 | 96,957 | 350 | 20 |
| Beispiel 12 | DPG / 68,22 | Beispiel 5 / 150,001 | 96,967 | 350 | 20 |

| | | | | | |
|---|---|---|---|---|---|
| * DPG = Dipropylenglykol, DEG = Diethylenglykol. | | | | | |

Die gesammelten analytischen Daten der Produkte der Beispiele 6 bis 12 sind in Tabelle 5 zusammengefasst.

**Tabelle 5: Analytische Daten der Produkte aus Beispielen 6-12.**

| Beispiele | Viskosität [mPa*s] | GPC | | |
|---|---|---|---|---|
| | | M_{N} | M_{w} | PD |
| Beispiel 6* | 16801 (5/s) | 1397 | 829242 | 593, 7 |
| | 3637 (150/s) | | | |
| Beispiel 7* | 1508 (5/s) | 1002 | 170627 | 170,3 |
| | 877 (150/s) | | | |
| Beispiel 8 | 151,8 | 800 | 56956 | 71,2 |
| Beispiel 9 | 44,3 | 799 | 8175 | 10,2 |
| Beispiel 10 | 42,0 | 642 | 5965 | 9,3 |
| Beispiel 11 | 39,4 | 782 | 7347 | 9,4 |
| Beispiel 12 | 41,2 | 754 | 6598 | 8,8 |

| | | | | |
|---|---|---|---|---|
| * Die Materialien aus Beispiel 6 und 7 zeigen thixotropes Verhalten. In beiden Fällen sind die Viskositäten bei definierten Scherraten (5 Umdrehungen/s und 150 Umdrehungen/s) angegeben. | | | | |

Anhand von MALDI-TOF-Untersuchungen am Produkt von Beispiel 6 konnten folgende Moleküle als Teil der Mischung identifiziert werden: 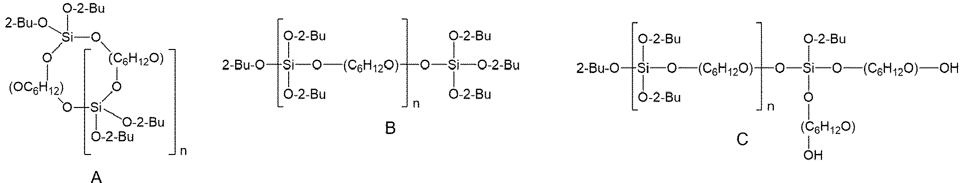 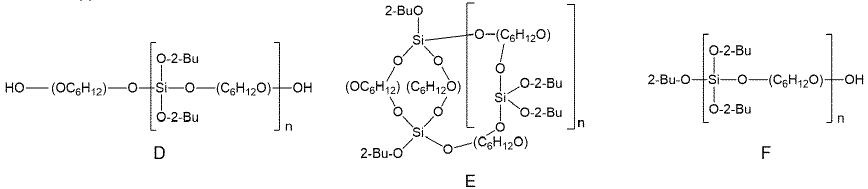 Über MALDI-TOF nachgewiesene Moleküle. Für die jeweiligen Verbindungen konnten folgende Indices nachgewiesen werden. Die Indices der Verbindungen A, B, C, D und F konnten von n = 1 - 11, für den Index E von n = 0 - 2 nachgewiesen werden. Bei Verbindung E könnten die Wiederholungseinheiten auch auf die anderen DPG-Einheiten verteilt vorliegen.

## Patentansprüche

1. Mischung aus polymeren Alkylsilikaten aufweisende Organosiliciumverbindung enthaltend zu mindestens 90 Gew-%, vorzugsweise zu mindestens 95 Gew.-%, eine Mischung aus polymeren Alkylsilikaten der Formel (I)
**[SiO_{4/2}]ₐ [(R^{x}O)SiO_{3/2}]_{b} [(R^{y}O)SiO_{3/2}]_{b}' [(R^{x}O)₂SiO_{2/2}]_{c} [(R^{x}O)(R^{y}O)SiO_{2/2}]_{c}' [(R^{y}O)₂SiO_{2/2}]_{c}" [(R^{x}O)₃SiO_{1/2}]_{d} [(R^{x}O)**₂**(R^{y}O)SiO_{1/2}]_{d}' [(R^{x}O)(R^{y}O)₂SiO_{1/2}]**_{d}**" [(R^{y}O)₃SiO_{1/2}]_{d}‴ [O_{1/2}R^{z}O_{1/2}]ₑ [O_{1/2}R^{z}OH]ₑ' [O_{1/2}R^{z}OR^{X}]ₑ" [O_{1/2}R^{z}OR^{y}*]ₑ‴** **(I),**
worin
die Indices **a, b, b', c, c', c", d, d', d", d‴, e', e"** und **e‴** unabhängig voneinander eine Zahl im Bereich von 0 bis 5000 bedeuten, worin der Index **e** eine Zahl im Bereich von 2 bis 5000 bedeutet, mit der Maßgabe, dass die Summe aller Indices mindestens 5 beträgt;
die Reste **R^{x}** unabhängig voneinander ausgewählt sind aus Resten, die mindestens eine der folgenden Bedingungen erfüllen:
(a) **R^{x}** ist ein Rest der Formel **-CHR^{p}₂** oder **-CR^{p}₃,** wobei **R^{p}** unabhängig voneinander einen einwertigen unsubstituierten oder substituierten Kohlenwasserstoffrest mit 1 bis 50 C-Atomen bedeutet,
(b) **R^{x}** ist ein substituierter oder unsubstituierter, C₅-C₂₀-Kohlenwasserstoffrest, der am β-Kohlenstoffatom zweifach verzweigt ist,
(c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
die Reste **R^{y}** unabhängig voneinander ein Wasserstoffatom, einen Methyl-, Ethyl-, n-Propyl-, oder n-Butylrest, vorzugsweise einen Methyl- oder Ethylrest, bedeuten;
worin die Reste **OR**^{y} teilweise durch Si-gebundene H-Atome ersetzt sein können;
**R^{y}*** ein Methyl-, Ethyl-, n-Propyl- oder n-Butylrest, vorzugsweise einen Methyl- oder Ethylrest, bedeutet;
die Reste **R^{z}** unabhängig voneinander einen zweiwertigen unsubstituierten oder substituierten über Kohlenstoff gebundenen Rest oder einen zweiwertigen über Silicium gebundenen Rest bedeuten, indem einzelne C- oder Si-Atome durch Sauerstoffatome ersetzt sein können;
mit der Maßgabe, dass die Einheiten **[O_{1/2}R^{z}O_{1/2}]** gebunden sind an zwei Einheiten, unabhängig voneinander ausgewählt aus der Gruppe der Einheiten **[SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}], [(R^{x}O)₃SiO_{1/2}], [(R^{x}O)₂(R^{y}O)SiO_{1/2}], [(R^{x}O)(R^{y}O)₂SiO_{1/2}]** und [**(R^{y}O)₃SiO_{1/2}]**;
mit der Maßgabe, dass die Einheiten **[O_{1/2}R^{z}OH], [O_{1/2}R^{z}OR^{x}]** und **[O_{1/2}R^{z}OR^{y}*]** gebunden sind an eine Einheit, unabhängig voneinander ausgewählt aus der Gruppe der Einheiten **[SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)2SiO_{2/2}];**
mit der Maßgabe, dass der molare Anteil an allen Resten **R^{y}** im polymeren Alkylsilikat höchstens 50 mol% beträgt, bezogen auf die molare Menge der Summe an allen Resten **R^{x}, R^{y}** und **R^{y}***,
wobei der molare Anteil für den Rest **OR**^{y} gleich Wasserstoff höchstens 33 mol-% beträgt, bezogen auf die molare Menge der Summe an allen Resten **OR^{x}** und **OR^{y}**;
und mit der Maßgabe, dass folgende polymere Alkylsilikate, ausschließlich bestehend aus Verbindungen der Formel II, ausgeschlossen sind: 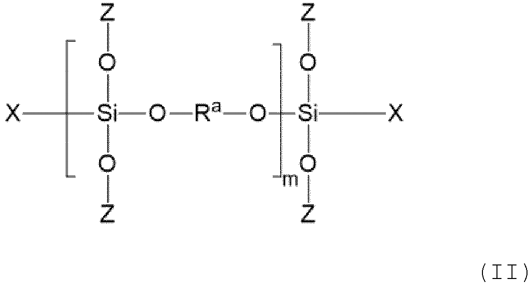 wobei
**Z** einen Rest der Formel -Si(OR^{b})₃ oder einen Rest der Formel -CR^{c}₃ bedeutet,
**R^{a}** unabhängig voneinander einen zweiwertigen unsubstituierten oder substituierten über Kohlenstoff gebundenen Rest oder einen zweiwertigen über Silicium gebundenen Rest bedeutet,
**R^{b}** unabhängig voneinander einen einwertigen unsubstituierten oder substituierten Kohlenwasserstoffrest mit 4 bis 40 C-Atomen bedeutet, der am α-Kohlenstoffatom verzweigt ist oder am β-Kohlenstoffatom zweifach verzweigt ist,
**R^{c}** unabhängig voneinander einen einwertigen unsubstituierten oder substituierten Kohlenwasserstoffrest mit 1 bis 50 C-Atomen, bedeutet,
**X** ein Halogenatom, einen über Sauerstoff gebundenen unsubstituierten oder substituierten C₁- bis C₄₀-Kohlenwasserstoffrest, wobei einzelne Kohlenstoffatome durch Sauerstoffatome ersetzt sein können, einen Rest der Formel -O-Si(OR^{b})₃ oder einen Rest der Formel -OSiRⁿ₃ bedeutet,
**Rⁿ** unabhängig voneinander einen einwertigen unsubstituierten oder substituierten C₁- bis C₄₀-Kohlenwasserstoffrest bedeutet und
**m** eine ganze Zahl von mindestens 2 und höchstens 1000 bedeutet.

2. Mischung aus polymeren Alkylsilikaten der Formel (I)
**[SiO_{4/2}]ₐ [(R^{x}O)SiO_{3/2}]_{b} [(R^{y}O)SiO_{3/2}]_{b}' [(R^{x}O)₂SiO_{2/2}]_{c} [(R^{x}O)(R^{y}O)SiO_{2/2}]_{c}' [(R^{y}O)₂SiO_{2/2}]_{c}" [(R^{x}O)₃SiO_{1/2}]_{d} [(R^{x}O)₂(R^{y}O)SiO_{1/2}]_{d}' [(R^{x}O)(R^{y}O)₂SiO_{1/2}]_{d}" [(R^{y}O)3SiO_{1/2}]d‴ [O_{1/2}R^{z}O_{1/2}]ₑ [O_{1/2}R^{z}OH]ₑ' [O_{1/2}R^{z}OR^{X}]ₑ" [O_{1/2}R^{z}OR^{y}*]ₑ‴** **(I),**
worin
die Indices **a, b, b', c, c', c", d, d', d", d**‴, **e', e"** und **e‴** unabhängig voneinander eine Zahl im Bereich von 0 bis 5000 bedeuten, worin der Index **e** eine Zahl im Bereich von 2 bis 5000 bedeutet, mit der Maßgabe, dass die Summe aller Indices mindestens 5 beträgt;
die Reste **R^{x}** unabhängig voneinander ausgewählt sind aus Resten, die mindestens eine der folgenden Bedingungen erfüllen:
(a) **R^{x}** ist ein Rest der Formel **-CHR^{p}₂** oder **-CR^{p}₃,** wobei **R^{p}** unabhängig voneinander einen einwertigen unsubstituierten oder substituierten Kohlenwasserstoffrest mit 1 bis 50 C-Atomen bedeutet,
(b) **R^{x}** ist ein substituierter oder unsubstituierter, C₅-C₂₀-Kohlenwasserstoffrest, der am β-Kohlenstoffatom zweifach verzweigt ist,
(c) **R^{x}** ist ein unsubstituierter oder mit Alkylgruppen substituierter Cyclopentyl-, Cyclohexyl- oder Cycloheptylrest mit insgesamt höchstens 9 Kohlenstoffatomen;
die Reste **R^{y}** unabhängig voneinander ein Wasserstoffatom, ein Methyl-, Ethyl-, n-Propyl-, oder n-Butylrest, vorzugsweise einen Methyl- oder Ethylrest, bedeuten;
worin die Reste **OR**^{y} teilweise durch Si-gebundene H-Atome ersetzt sein können;
**R^{y}*** ein Methyl-, Ethyl-, n-Propyl- oder n-Butylrest, vorzugsweise einen Methyl- oder Ethylrest, bedeutet;
die Reste **R^{z}** unabhängig voneinander einen zweiwertigen unsubstituierten oder substituierten über Kohlenstoff gebundenen Rest oder einen zweiwertigen über Silicium gebundenen Rest bedeuten, indem einzelne C- oder Si-Atome durch Sauerstoffatome ersetzt sein können;
mit der Maßgabe, dass die Einheiten **[O_{1/2}R^{z}O_{1/2}]** gebunden sind an zwei Einheiten, unabhängig voneinander ausgewählt aus der Gruppe der Einheiten **[SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}], [(R^{x}O)₃SiO_{1/2}], [(R^{x}O)₂(R^{y}O)SiO_{1/2}], [(R^{x}O)(R^{y}O)₂SiO_{1/2}]** und **[(R^{y}O)₃SiO_{1/2}];**
mit der Maßgabe, dass die Einheiten **[O_{1/2}R^{z}OH], [O_{1/2}R^{z}OR^{x}]** und **[O_{1/2}R^{z}OR^{y}*]** gebunden sind an eine Einheit, unabhängig voneinander ausgewählt aus der Gruppe der Einheiten **[SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)2SiO_{2/2}];**
mit der Maßgabe, dass der molare Anteil an allen Resten **R^{y}** im polymeren Alkylsilikat höchstens 50 mol% beträgt, bezogen auf die molare Menge der Summe an allen Resten **R^{x}, R^{y}** und **R^{y}***,
wobei der molare Anteil für den Rest **OR^{y}** gleich Wasserstoff höchstens 33 mol-% beträgt, bezogen auf die molare Menge der Summe an allen Resten **OR^{x}** und **OR^{y}**;
und mit der Maßgabe, dass folgende polymere Alkylsilikate, ausschließlich bestehend aus Verbindungen der Formel II, ausgeschlossen sind: 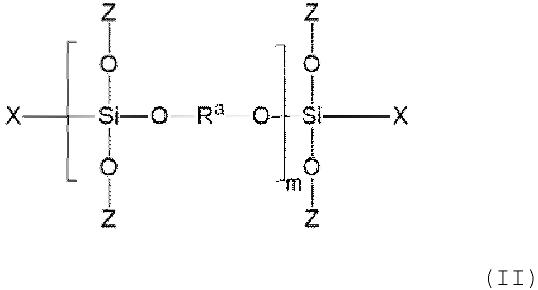 wobei
**Z** einen Rest der Formel -Si(OR^{b})₃ oder einen Rest der Formel -CR^{c}₃ bedeutet,
**R^{a}** unabhängig voneinander einen zweiwertigen unsubstituierten oder substituierten über Kohlenstoff gebundenen Rest oder einen zweiwertigen über Silicium gebundenen Rest bedeutet,
**R^{b}** unabhängig voneinander einen einwertigen unsubstituierten oder substituierten Kohlenwasserstoffrest mit 4 bis 40 C-Atomen bedeutet, der am α-Kohlenstoffatom verzweigt ist oder am β-Kohlenstoffatom zweifach verzweigt ist,
**R^{c}** unabhängig voneinander einen einwertigen unsubstituierten oder substituierten Kohlenwasserstoffrest mit 1 bis 50 C-Atomen, bedeutet,
**X** ein Halogenatom, einen über Sauerstoff gebundenen unsubstituierten oder substituierten C₁- bis C₄₀-Kohlenwasserstoffrest, wobei einzelne Kohlenstoffatome durch Sauerstoffatome ersetzt sein können, einen Rest der Formel -O-Si(OR^{b})₃ oder einen Rest der Formel -OSiRⁿ₃ bedeutet,
**Rⁿ** unabhängig voneinander einen einwertigen unsubstituierten oder substituierten C₁- bis C₄₀-Kohlenwasserstoffrest bedeutet und
**m** eine ganze Zahl von mindestens 2 und höchstens 1000 bedeutet.

3. Mischung aus polymeren Alkylsilikaten nach Anspruch 1 oder 2, **dadurch gekennzeichnet, dass** die polymeren Alkylsilikate keine SiC-gebundenen Reste enthalten.

4. Mischung aus polymeren Alkylsilikaten nach Anspruch 1, 2 oder 3, **dadurch gekennzeichnet, dass** die polymeren Alkylsilikate mindestens 2, vorzugsweise mindestens 3, Strukturelemente ausgewählt aus der Gruppe der Formeln 1 bis 10 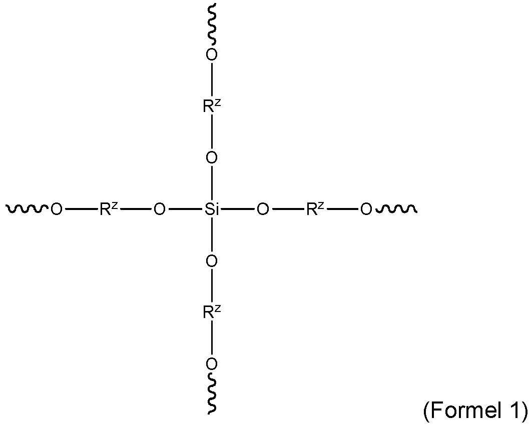 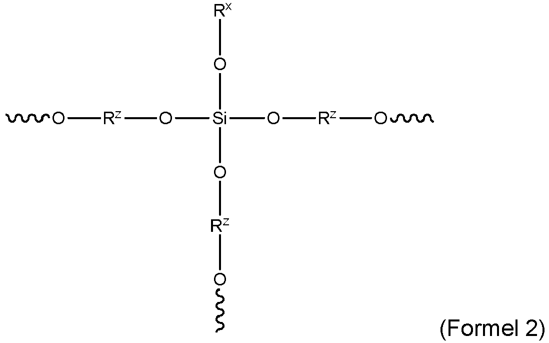 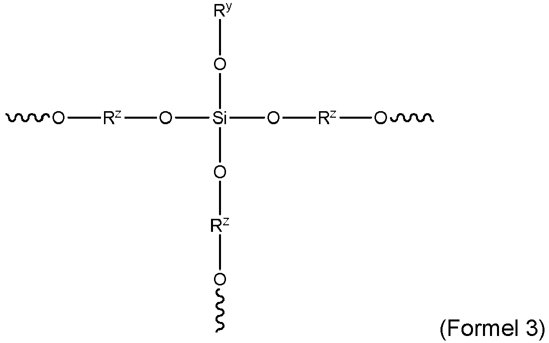 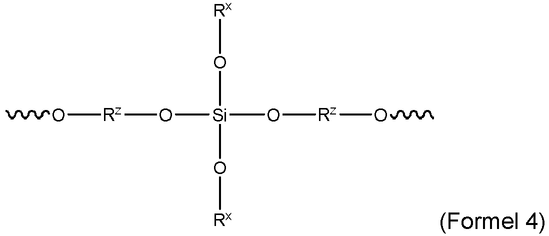 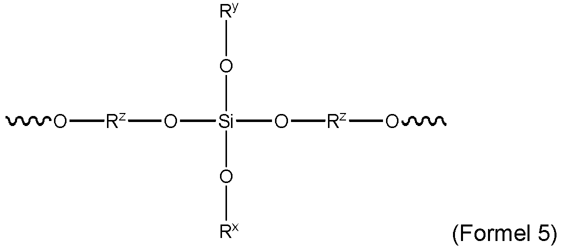 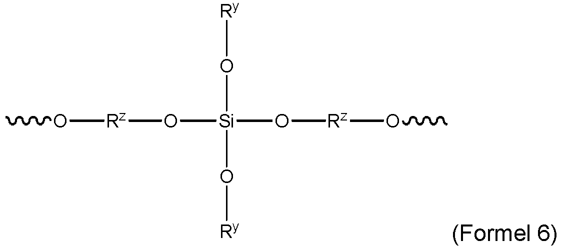 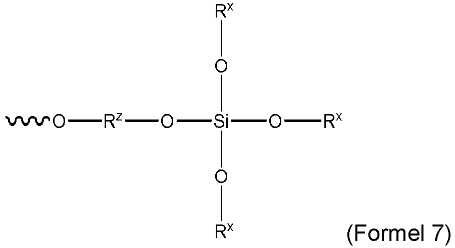 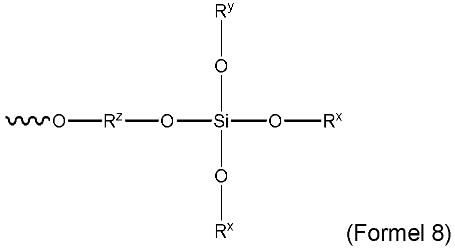 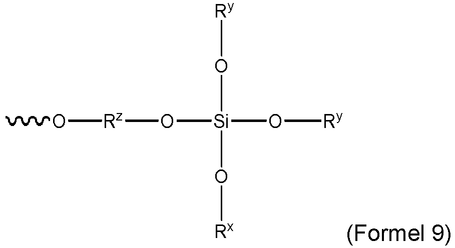 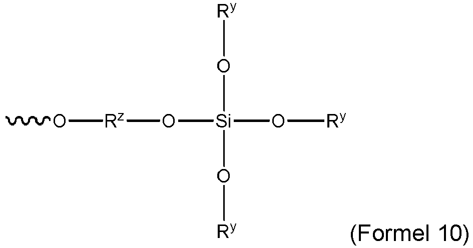 enthalten, mit der Maßgabe, dass die Summe der Anzahl an Struktureinheiten der Formeln 1 + 2 + 3 + 5 + 6 weniger als 60%, bevorzugt weniger als 50%, besonders bevorzugt weniger als 35% und insbesondere bevorzugt weniger als 20%, jeweils bezogen auf die Summe der Anzahl aller Struktureinheiten, beträgt und mit der Maßgabe, dass wenn eine Struktureinheit der Formel 4 mit **R^{x}** in der Bedeutung von **-CR^{p}₃** enthalten ist, mindestens eine weitere Struktureinheit ausgewählt aus der Gruppe der Formeln 1, 2, 3, 5, 6, 9 und 10 enthalten ist, wobei R^{p}, **R^{x}**, **R^{y}** und **R^{z}** die im Anspruch 1 dafür angegebene Bedeutung haben.

5. Mischung aus polymeren Alkylsilikaten nach einem der Ansprüche 1 bis 4, **dadurch gekennzeichnet, dass R^{x}** ein Rest der Formel **-CHR^{p}₂** oder **-CR^{p}₃** ist,
wobei **R^{p}** unabhängig voneinander einen einwertigen unsubstituierten oder substituierten Kohlenwasserstoffrest mit 1 bis 10 C-Atomen, vorzugsweise 1 bis 6 C-Atomen, bedeutet.

6. Mischung aus polymeren Alkylsilikaten nach einem der Ansprüche 1 bis 5, **dadurch gekennzeichnet, dass** die Reste **R^{x}** ausgewählt sind aus der Gruppe bestehend aus tert.-Butyl-, 2-Butylrest, 3-Methyl-2-butyl, 3-Methyl-2-pentyl, 3-Pentylrest, 2-Hexylrest, 3-Hexylrest, 2-Heptylrest, 2-Octylrest, 1-Phenylethylrest, 1-Phenyl-1-propyl-rest, 1,1-Dimethylpropylrest und deren Mischungen.

7. Mischung aus polymeren Alkylsilikaten nach einem der Ansprüche 1 bis 6, **dadurch gekennzeichnet, dass** die Reste **R^{z}** unabhängig voneinander einen zweiwertigen Kohlenwasserstoffrest mit 3 bis 200 Kohlenstoffatomen, bevorzugt mit 3 bis 50 Kohlenstoffatomen, wobei die Kohlenstoffatome durch Sauerstoffatome oder durch Siloxanylreste der Formel -(R³₂SiO)ₒ-SiR³₂- ersetzt sein können, bedeuten, wobei
R³ unabhängig voneinander einen C₁- bis C₂₀-Kohlenwasserstoffrest, bevorzugt einen C₁- bis C₆-Kohlenwasserstoffrest, bedeutet und
o eine ganze Zahl von 0 bis 100, bevorzugt eine ganze Zahl von 1 bis 20, ist.

8. Mischung aus polymeren Alkylsilikaten nach einem der Ansprüche 1 bis 7, **dadurch gekennzeichnet, dass** die Reste **R^{z}** ausgewählt sind aus der Gruppe bestehend aus 1,3-Propylenrest, 1,4-Butylenrest, 1,2-Cyclohexylidenrest, 1,3-Cyclohexylidenrest, 1,4-Cyclohexylidenrest, 1,2-Phenylenrest, 1,3-Phenylenrest und 1,4-Phenylenrest sowie Resten der Formeln
-CR⁴₂-CR⁴₂-(OCR⁴₂-CR⁴₂)ₚ-,
-CR⁴₂-(CR⁴₂)_{q}-(OCR⁴₂-(CR⁴₂)_{q})ₚ-,
-(Me₂SiO)ₒ-Me₂Si-,
-CH₂-CH₂-CH₂-(Me₂SiO)ₒ-Me₂Si-CH₂-CH₂-CH₂-,
-CH₂-CH₂-(Me₂SiO)ₒ-Me₂Si-CH₂-CH₂- und
-CH₂-(Me₂SiO)ₒ-Me₂Si-CH₂-,
wobei
Me ein Methylrest ist,
R⁴ gleich oder verschieden sein kann und ein Wasserstoffatom oder einen C₁- bis C₁₈-Kohlenwasserstoffrest, bevorzugt ein Wasserstoffatom oder einen Methylrest, bedeutet,
o eine ganze Zahl von 0 bis 100, bevorzugt 1 bis 20,
p eine ganze Zahl von 0 bis 100, bevorzugt 1 bis 20, und
q eine ganze Zahl von 1 bis 100, bevorzugt 1 bis 50, ist.

9. Mischung aus polymeren Alkylsilikaten nach einem der Ansprüche 1 bis 8, worin die Indices **a, b, b', c, c', c", d, d', d", d‴, e', e" und e‴** unabhängig voneinander eine Zahl im Bereich von 0 bis 500, bevorzugt 0 bis 20, bedeuten, worin der Index **e** eine Zahl im Bereich von 2 bis 500, bevorzugt 2 bis 20, bedeutet, mit der Maßgabe, dass die Summe aller Indices mindestens 5 beträgt.

10. Verfahren zur Herstellung der Mischung aus polymeren Alkylsilikaten der Formel (I) nach einem der Ansprüche 1 bis 9, indem
Silane (1), ausgewählt aus der Gruppe von Tetrachlorsilan (1a), Tetraalkoxysilan (1b), Teilhydrolysate von Tetrachlorsilan, Teilhydrolysate von Tetraalkoxysilan und deren Mischungen, ggf. unter Zusatz von Lösungsmitteln (7),
mit Monohydroxyverbindungen (2) der Formel
**HO-R^{x}**,
ggf. unter Zusatz von primären Alkoholen (3) der Formel **HO-R^{y}** und/oder
ggf. unter Zusatz von Wasser (4),
und mit Dihydroxyverbindungen (5) der Formel
**HO-R^{z}-OH**
oder deren Salze
ggf. in Gegenwart von Katalysatoren (6),
gleichzeitig in einem Schritt oder nacheinander in zwei Schritten, vorzugsweise nacheinander in zwei Schritten, umgesetzt werden,
mit der Maßgabe, dass wenn SiCl₄ (1a) mit Monohydroxyverbindungen (2) der Formel **HO-R^{x}**, bei der **R^{x}** ein Rest der Formel **-CR^{p}₃** ist, umgesetzt wird,
dem Reaktionsgemisch mindestens eine weitere Verbindung ausgewählt aus der Gruppe bestehend aus Monohydroxyverbindungen (2) der Formel **HO-R^{x}**, bei der **R^{x}** die in Anspruch 1 dafür angegebene Bedeutung hat, aber kein Rest der Formel **-CR^{p}₃** ist,
primären Alkoholen (3) der Formel **HO-R^{y},**
Wasser (4) und deren Mischungen zugegeben wird,
und mit der Maßgabe, dass Monohydroxyverbindungen (2) und primäre Alkohole (3) in Mengen von 1,0 bis 3,0 Mol, vorzugsweise 1,5 bis 2,5 Mol, je Mol Silan (1) und Dihydroxyverbindungen (5) in Mengen von 0,7 bis 1,5 Mol, vorzugsweise 0,9 bis 1,1 Mol, je Mol Silan (1) eingesetzt werden,
wobei **R^{p}, R^{x}, R^{y}** und **R^{z}** die in Anspruch 1 dafür angegebene Bedeutung haben.

11. Verfahren zur Herstellung der Mischung aus polymeren Alkylsilikaten der Formel (I) nach Anspruch 10, **dadurch gekennzeichnet, dass**
Silane (1), ausgewählt aus der Gruppe von Tetrachlorsilan (1a), Tetraalkoxysilan (1b), Teilhydrolysate von Tetrachlorsilan, Teilhydrolysate von Tetraalkoxysilan und deren Mischungen, ggf. unter Zusatz von Lösungsmitteln (7),
mit sekundären Alkoholen (2a) oder tertiären Alkoholen (2b) der Formel
**HO-R^{x}**,
wobei **R^{x}** ein Rest der Formel **-CHR^{p}₂** oder **-CR^{p}₃** bedeutet,
ggf. unter Zusatz von primären Alkoholen (3) der Formel **HO-R^{y}** und/oder
ggf. unter Zusatz von Wasser (4),
und mit Dihydroxyverbindungen (5) der Formel
**HO-R^{z}-OH**
oder deren Salze
ggf. in Gegenwart von Katalysatoren (6),
gleichzeitig in einem Schritt oder nacheinander in zwei Schritten umgesetzt werden,
mit der Maßgabe, dass wenn SiCl₄ (1a) mit einem tertiären Alkohol (2b) **HO-R^{x}** umgesetzt wird, wobei **R^{x}** dabei einen Rest der Formel **-CR^{p}₃** bedeutet, dem Reaktionsgemisch mindestens eine weitere Verbindung ausgewählt aus der Gruppe bestehend aus sekundären Alkoholen (2a) **HO-R^{x}**, wobei **R^{x}** dabei ein Rest der Formel **-CHR^{p}₂** ist,
primären Alkoholen (3) **HO-R^{y},**
Wasser (4) und deren Mischungen zugegeben wird,
und mit der Maßgabe, dass Alkohole der Formeln **HO-R^{x}** und **HO-R^{y}** in Mengen von 1,0 bis 3,0 Mol, vorzugsweise 1,5 bis 2,5 Mol, je Mol Silan (1) und Dihydroxyverbindungen (5) in Mengen von 0,7 bis 1,5 Mol, vorzugsweise 0,9 bis 1,1 Mol, je Mol Silan (1) eingesetzt werden,
wobei **R^{p}, R^{x}, R^{y}** und **R^{z}** die in Anspruch 1 dafür angegebene Bedeutung haben.

12. Verfahren zur Herstellung der Mischung aus polymeren Alkylsilikaten der Formel (I) nach Anspruch 11, **dadurch gekennzeichnet, dass**
in einem ersten Schritt
Silane (1), ausgewählt aus der Gruppe von Tetrachlorsilan (1a), Tetraalkoxysilane (1b), Teilhydrolysate von Tetrachlorsilan, Teilhydrolysate von Tetraalkoxysilan und deren Mischungen,
ggf. unter Zusatz von Lösungsmitteln (7),
mit sekundären Alkoholen (2a) oder tertiären Alkoholen (2b) der Formel
**HO-R^{x}**,
wobei **R^{x}** ein Rest der Formel **-CHR^{p}₂** oder **-CR^{p}₃** bedeutet,
ggf. unter Zusatz von primären Alkoholen (3) der Formel **HO-R^{y}** und/oder
ggf. unter Zusatz von Wasser (4),
umgesetzt werden und
in einem zweiten Schritt
die aus dem ersten Schritt erhaltenen Reaktionsgemische
mit Dihydroxyverbindungen (5) der Formel
**HO-R^{z}-OH**
oder deren Salze
ggf. in Gegenwart von Katalysatoren (6) und
ggf. unter Zusatz von Lösungsmitteln (7)
umgesetzt werden,
mit der Maßgabe, dass wenn SiCl₄ (1a) mit einem tertiären Alkohol (2b) **HO-R^{x}** umgesetzt wird, wobei R^{x} dabei einen Rest der Formel **-CR^{p}₃** bedeutet, dem Reaktionsgemisch mindestens eine weitere Verbindung ausgewählt aus der Gruppe bestehend aus sekundären Alkoholen (2a) **HO-R^{x}**, wobei **R^{x}** dabei ein Rest der Formel **-CHR^{p}₂** ist,
primären Alkoholen (3) **HO-R^{y},**
Wasser (4) und deren Mischungen zugegeben wird,
und mit der Maßgabe, dass Alkohole der Formeln **HO-R^{x}** und **HO-R^{y}** in Mengen von 1,0 bis 3,0 Mol, vorzugsweise 1,5 bis 2,5 Mol, je Mol Silan (1) und Dihydroxyverbindungen (5) in Mengen von 0,7 bis 1,5 Mol, vorzugsweise 0,9 bis 1,1 Mol, je Mol Silan (1) eingesetzt werden,
wobei **R^{p}, R^{x}, R^{y}** und **R^{z}** die in Anspruch 1 dafür angegebene Bedeutung haben.

13. Verfahren zur Herstellung der Mischung aus polymeren Alkylsilikaten der Formel (I) nach Anspruch 10, 11 oder 12, **dadurch gekennzeichnet, dass** als Katalysatoren (6) Stickstoffbasen ausgewählt aus der Gruppe bestehend aus Pyridin, Ammoniak, Harnstoff, Ethylendiamin, Triethylamin, Tributylamin und deren Mischungen eingesetzt werden.

14. Verfahren zur Herstellung der Mischung aus polymeren Alkylsilikaten der Formel (I) nach einem der Ansprüche 10 bis 13 **dadurch gekennzeichnet, dass** Lösungsmittel (7) im zweiten Verfahrensschritt eingesetzt werden.

15. Verfahren zur Herstellung der Mischung aus polymeren Alkylsilikaten der Formel (I) nach einem der Ansprüche 1 bis 9,
indem Verbindungen der Formel
**Si(H)₁(OR^{x})ₖ(OR^{y})ⱼ**
und/oder deren Teilhydrolysate,
wobei
der Index l 1, 2, 3 oder 4, bevorzugt von 1 oder 2, bedeutet,
und die Indices k und j unabhängig voneinander 0, 1, 2 oder 3 bedeuten,
mit der Maßgabe, dass die Summe aus l + k + j gleich 4 ist,
mit Dihydroxyverbindungen (5) der Formel
**HO-R^{z}-OH**
ggf. in Gegenwart eines Katalysators (6) und
ggf. unter Zusatz von Lösungsmitteln (7)
unter Abspaltung von Wasserstoff umgesetzt werden, wobei **R^{x}, R^{y}** und **R^{z}** die im Anspruch 1 dafür angegebene Bedeutung haben.

## Claims

1. Organosilicon compound comprising a mixture of polymeric alkyl silicates, comprising at least 90% by weight, preferably at least 95% by weight, of a mixture of polymeric alkyl silicates of the formula (I)
[SiO_{4/2]a} [(R^{x}O)SiO_{3/2}]_{b} [(R^{y}O)SiO_{3/2}]_{b}' [(R^{x}O)₂SiO_{2/2}]_{c} [(R^{x}O)(R^{y}O)SiO_{2/2]c}' [(R^{y}O)₂SiO_{2/2}]_{c}" [(R^{x}O)₃SiO_{1/2}]_{d} [(R^{x}O)₂(RYO) SiO_{1/2]d}' [(R^{x}O)(R^{y}O)₂SiO_{1/2}]_{d}" [(R^{y}O)₃SiO_{1/2}]_{d}‴ [O_{1/2}R^{z}O_{1/2}]ₑ [O_{1/2}R^{z}OH]ₑ' [O_{1/2}R^{z}OR^{x}]ₑ" [O_{1/2}R^{z}OR^{y}*]ₑ‴ (I),
wherein
the indices a, b, b', c, c', c", d, d', d'', d''', e', e" and e‴ independently of one another indicate a number in the range from 0 to 5000, where the index e is a number in the range of 2 to 5000, with the proviso that the sum of all indices is at least 5;
the radicals R^{x} are each independently selected from radicals that satisfy at least one of the following conditions:
(a) R^{x} is a radical of the formula -CHR^{p}₂ or -CR^{p}₃, wherein R^{p} is each independently a monovalent unsubstituted or substituted hydrocarbon radical having 1 to 50 carbon atoms,
(b) R^{x} is a substituted or unsubstituted, C₅-C₂₀ hydrocarbon radical that is doubly branched at the β-carbon atom,
(c) R^{x} is an unsubstituted or alkyl-substituted cyclopentyl, cyclohexyl or cycloheptyl radical having a total of not more than 9 carbon atoms;
the radicals R^{y} are each independently a hydrogen atom, a methyl, ethyl, n-propyl or n-butyl radical, preferably a methyl or ethyl radical;
in which the radicals ORY may be partially replaced by Si-bonded H atoms;
R^{y}* is a methyl, ethyl, n-propyl or n-butyl radical, preferably a methyl or ethyl radical;
the radicals R^{z} are each independently a divalent unsubstituted or substituted radical bonded via carbon or a divalent radical bonded via silicon, in which individual carbon or Si atoms may be replaced by oxygen atoms;
with the proviso that the units [O_{1/2}R^{z}O_{1/2}] are bonded to two units independently selected from the group of units comprising [SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}], [(R^{x}O)₃SiO_{1/2}], [(R^{x}O)₂(R^{y}O)SiO_{1/2}], [(R^{x}O)(R^{y}O)₂SiO_{1/2}] and [(R^{y}O)₃SiO_{1/2}];
with the proviso that the units [O_{1/2}R^{Z}OH], [O_{1/2}R^{Z}OR^{X}] and [O_{1/2}R^{z}OR^{y}*] are bonded to one unit independently selected from the group of units comprising [SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], (R^{y}O)₂SiO_{2/2}];
with the proviso that the molar proportion of all radicals R^{y} in the polymeric alkyl silicate is at most 50 mol%, based on the molar amount of the sum of all radicals R^{x}, R^{y} and R^{y}*,
wherein the molar fraction for the radical OR^{y} equal to hydrogen is at most 33 mol%, based on the molar amount of the sum of all radicals OR^{x} and OR^{y};
and with the proviso that the following polymeric alkyl silicates, consisting exclusively of compounds of formula II, are excluded: 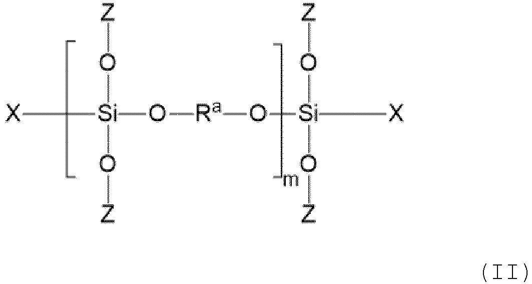 wherein
Z is a radical of formula -Si(OR^{b})₃ or a radical of formula -CR^{c}₃,
R^{a} is each independently a divalent unsubstituted or substituted carbon-bonded radical or a divalent silicon-bonded radical,
R^{b} is each independently a monovalent unsubstituted or substituted hydrocarbon radical having 4 to 40 carbon atoms which is branched at the α-carbon atom or is doubly branched at the β-carbon atom,
R^{c} is each independently a monovalent unsubstituted or substituted hydrocarbon radical having 1 to 50 carbon atoms,
X is a halogen atom, an oxygen-bonded unsubstituted or substituted C₁- to C₄₀-hydrocarbon radical, wherein individual carbon atoms may be replaced by oxygen atoms, a radical of formula -O-Si(OR^{b})₃ or a radical of formula -OSiRⁿ₃,
Rⁿ is each independently a monovalent unsubstituted or substituted C₁- to C₄₀-hydrocarbon radical and
m is an integer of at least 2 and at most 1000.

2. Mixture of polymeric alkyl silicates of the formula (I)
[SiO_{4/2}]ₐ [(R^{x}O)SiO_{3/2}]_{b} [(R^{y}O)SiO_{3/2}]_{b}' [(R^{x}O)₂SiO_{2/2}]_{c} [(R^{x}O)(R^{y}O)SiO_{2/2}]_{c}' [(R^{y}O)₂SipO_{2/2}]_{c}" [(R^{x}O)₃SiO_{1/2}]_{d} [(R^{x}O)₂(R^{y}O)SiO_{1/2}]_{d}' [(R^{x}O)(R^{y}O)₂SiO_{1/2}]_{d}" [(R^{y}O)₃SiO_{1/2}]_{d}‴ [O_{1/2}R^{z}O_{1/2}]ₑ [O_{1/2}R^{z}OH]ₑ' [O_{1/2}R^{z}OR^{X}]ₑ" [O_{1/2}R^{z}OR^{y}*]ₑ‴ (I),
wherein
the indices a, b, b', c, c', c", d, d', d'', d''', e', e" and e‴ independently of one another indicate a number in the range from 0 to 5000, where the index e is a number in the range of 2 to 5000, with the proviso that the sum of all indices is at least 5;
the radicals R^{x} are each independently selected from radicals that satisfy at least one of the following conditions:
(a) R^{x} is a radical of the formula -CHR^{p}₂ or -CR^{p}₃, wherein R^{p} is each independently a monovalent unsubstituted or substituted hydrocarbon radical having 1 to 50 carbon atoms,
(b) R^{x} is a substituted or unsubstituted, C₅-C₂₀ hydrocarbon radical that is doubly branched at the β-carbon atom,
(c) R^{x} is an unsubstituted or alkyl-substituted cyclopentyl, cyclohexyl or cycloheptyl radical having a total of not more than 9 carbon atoms;
the radicals R^{y} are each independently a hydrogen atom, a methyl, ethyl, n-propyl or n-butyl radical, preferably a methyl or ethyl radical;
in which the radicals OR^{y} may be partially replaced by Si-bonded H atoms;
R^{y}* is a methyl, ethyl, n-propyl or n-butyl radical, preferably a methyl or ethyl radical;
the radicals R^{z} are each independently a divalent unsubstituted or substituted radical bonded via carbon or a divalent radical bonded via silicon, in which individual carbon or Si atoms may be replaced by oxygen atoms;
with the proviso that the units [O_{1/2}R^{z}O_{1/2}] are bonded to two units independently selected from the group of units comprising [SiO_{4/2}], [(R^{x}O)SiO_{3/2}], [(R^{y}O)SiO_{3/2}], [(R^{x}O)₂SipO_{2/2}], [(R^{x}O)(R^{y}O)SiO_{2/2}], [(R^{y}O)₂SipO_{2/2}], [(R^{x}O)₃SiO_{1/2}], [(R^{x}O)₂(R^{y}O) SiO_{1/2}], [(R^{x}O)(R^{y}O)₂SiO_{1/2}] and [(R^{y}O)₃SiO_{1/2}];
with the proviso that the units [O_{1/2}R^{Z}OH], [O_{1/2}R^{Z}OR^{X}] and [O_{1/2}R^{z}OR^{y}*] are bonded to one unit independently selected from the group of units comprising [SiO_{4/2}], [(R^{x}O)SiO_{3/2}], [(R^{y}O)SiO_{3/2}], [(R^{x}O)₂SipO_{2/2}], [(R^{x}O)(R^{y}O)SiO_{2/2}], (R^{y}O)₂SipO_{2/2}];
with the proviso that the molar proportion of all radicals R^{y} in the polymeric alkyl silicate is at most 50 mol%, based on the molar amount of the sum of all radicals R^{X}, R^{y} and R^{y}*,
wherein the molar fraction for the radical ORY equal to hydrogen is at most 33 mol%, based on the molar amount of the sum of all radicals OR^{x} and ORY;
and with the proviso that the following polymeric alkyl silicates, consisting exclusively of compounds of formula II, are excluded: 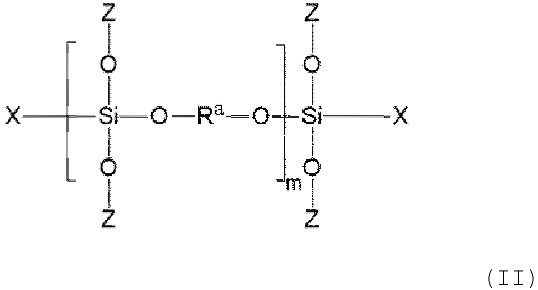 where
Z is a radical of formula -Si(OR^{b})₃ or a radical of formula -CR^{c}₃,
R^{a} is each independently a divalent unsubstituted or substituted carbon-bonded radical or a divalent silicon-bonded radical,
R^{b} is each independently a monovalent unsubstituted or substituted hydrocarbon radical having 4 to 40 carbon atoms which is branched at the α-carbon atom or is doubly branched at the β-carbon atom,
R^{c} is each independently a monovalent unsubstituted or substituted hydrocarbon radical having 1 to 50 carbon atoms,
X is a halogen atom, an oxygen-bonded unsubstituted or substituted C₁- to C₄₀-hydrocarbon radical, wherein individual carbon atoms may be replaced by oxygen atoms, a radical of formula -O-Si(OR^{b})₃ or a radical of formula -OSiRⁿ₃,
Rⁿ is each independently a monovalent unsubstituted or substituted C₁- to C₄₀-hydrocarbon radical and
m is an integer of at least 2 and at most 1000.

3. Mixture of polymeric alkyl silicates according to Claim 1 or 2, **characterized in that** the polymeric alkyl silicates do not contain SiC-bonded radicals.

4. Mixture of polymeric alkyl silicates according to Claim 1, 2 or 3, **characterized in that** the polymeric alkyl silicates comprise at least 2, preferably at least 3, structural elements selected from the group of formulae 1 to 10 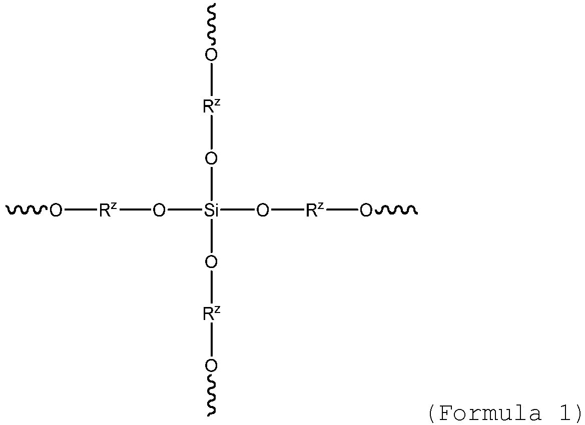 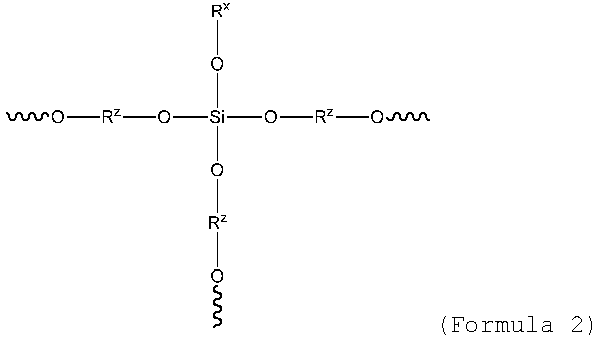 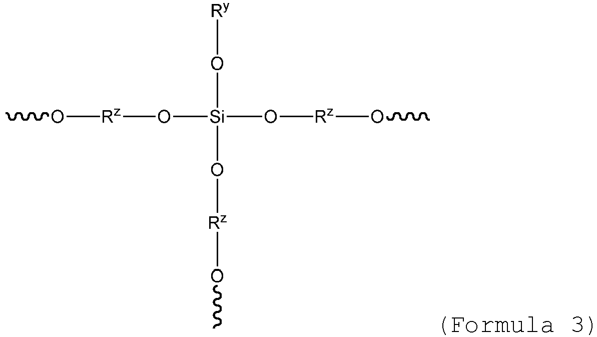 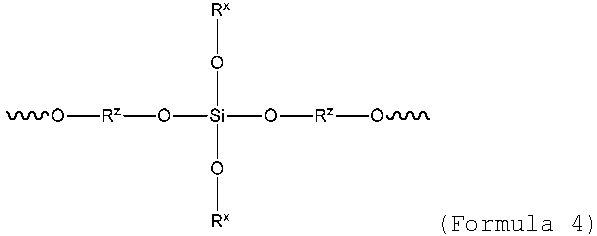 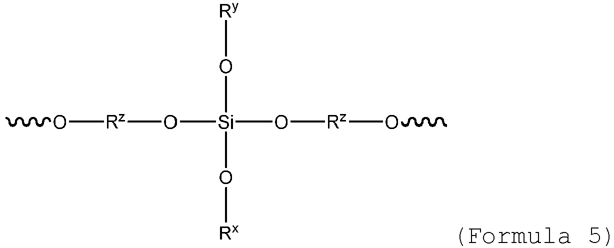 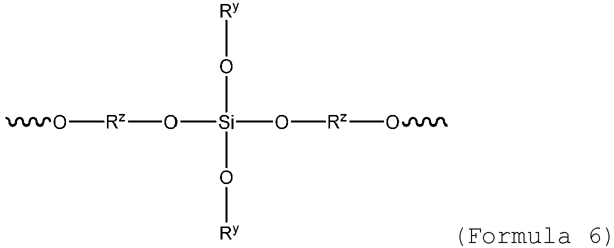 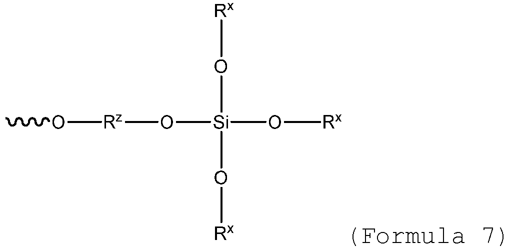 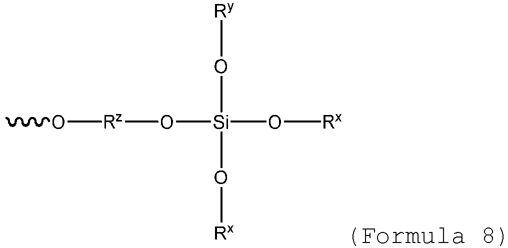 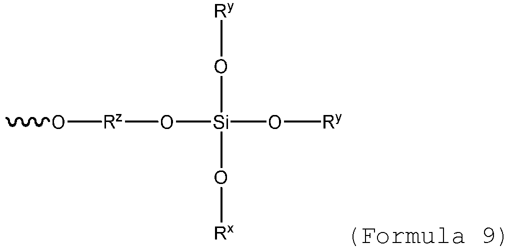 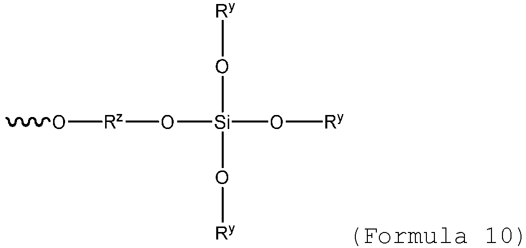 with the proviso that the sum of the number of structural units of the formulae 1 + 2 + 3 + 5 + 6 is less than 60%, preferably less than 50%, particularly preferably less than 35% and especially preferably less than 20%, based in each case on the sum of the number of all structural units, and with the proviso that if a structural unit of formula 4 is present where R^{x} has the definition of -CR^{p}₃, at least one further structural unit selected from the group of formulae 1, 2, 3, 5, 6, 9 and 10 is present, where RP, R^{x}, R^{y} and R^{z} have the definition stated therefor in Claim 1.

5. Mixture of polymeric alkyl silicates according to any of Claims 1 to 4, **characterized in that**
R^{x} is a radical of the formula -CHR^{p}₂ or -CR^{p}₃,
wherein RP is each independently a monovalent unsubstituted or substituted hydrocarbon radical having 1 to 10 carbon atoms, preferably 1 to 6 carbon atoms.

6. Mixture of polymeric alkyl silicates according to any of Claims 1 to 5, **characterized in that**
the radicals R^{x} are selected from the group consisting of tert-butyl, 2-butyl radical, 3-methyl-2-butyl, 3-methyl-2-pentyl, 3-pentyl radical, 2-hexyl radical, 3-hexyl radical, 2-heptyl radical, 2-octyl radical, 1-phenylethyl radical, 1-phenyl-1-propyl radical, 1,1-dimethylpropyl radical and mixtures thereof.

7. Mixture of polymeric alkyl silicates according to any of Claims 1 to 6, **characterized in that** the radicals R^{z} are each independently a divalent hydrocarbon radical having 3 to 200 carbon atoms, preferably having 3 to 50 carbon atoms, wherein the carbon atoms may be replaced by oxygen atoms or by siloxanyl radicals of the formula
- (R³₂SiO)ₒ-SiR³₂-, wherein
R³ is each independently a C₁- to C₂₀-hydrocarbon radical, preferably a C₁- to C₆-hydrocarbon radical, and
o is an integer from 0 to 100, preferably an integer from 1 to 20.

8. Mixture of polymeric alkyl silicates according to any of Claims 1 to 7, **characterized in that**
the radicals R^{z} are selected from the group consisting of 1,3-propylene radical, 1,4-butylene radical, 1,2-cyclohexylidene radical, 1,3-cyclohexylidene radical, 1,4-cyclohexylidene radical, 1,2-phenylene radical, 1,3-phenylene radical and 1,4-phenylene radical and radicals of the formulae
-CR⁴₂-CR⁴₂-(OCR⁴₂-CR⁴₂)ₚ-,
-CR⁴₂-(CR⁴₂)_{q}-(OCR⁴₂-(CR⁴₂)_{q})ₚ-,
-(Me₂SiO)ₒ-Me₂Si-,
-CH₂-CH₂-CH₂-(Me₂SiO)ₒ-Me₂Si-CH₂-CH₂-CH₂-,
-CH₂-CH₂-(Me₂SiO)ₒ-Me₂Si-CH₂-CH₂- and
-CH₂-(Me₂SiO)ₒ-Me₂Si-CH₂-,
where
Me is a methyl radical,
R⁴ may be the same or different and is a hydrogen atom or a C₁- to C₁₈-hydrocarbon radical, preferably a hydrogen atom or a methyl radical,
o is an integer from 0 to 100, preferably 1 to 20,
p is an integer from 0 to 100, preferably 1 to 20, and
q is an integer from 1 to 100, preferably 1 to 50.

9. Mixture of polymeric alkyl silicates according to any of Claims 1 to 8, wherein the indices a, b, b', c, c', c", d, d', d", d‴, e', e" and e‴ are each independently a number in the range from 0 to 500, preferably 0 to 20, wherein the index e is a number in the range from 2 to 500, preferably 2 to 20, with the proviso that the sum of all indices is at least 5.

10. Process for preparing the mixture of polymeric alkyl silicates of the formula (I) according to any of Claims 1 to 9, by reacting
silanes (1), selected from the group of tetrachlorosilane (1a), tetraalkoxysilane (1b), partial hydrolysates of tetrachlorosilane, partial hydrolysates of tetraalkoxysilane and mixtures thereof,
optionally with the addition of solvents (7),
with monohydroxy compounds (2) of formula
HO-R^{x},
optionally with the addition of primary alcohols (3) of the formula
HO-R^{y} and/or
optionally with the addition of water (4),
and with dihydroxy compounds (5) of formula
HO-R^{z}-OH
or salts thereof,
optionally in the presence of catalysts (6),
simultaneously in one step or successively in two steps, preferably successively in two steps,
with the proviso that if SiCl₄ (1a) is reacted with monohydroxy compounds (2) of the formula HO-R^{x}, in which R^{X} is a radical of the formula -CR^{p}₃,
at least one further compound selected from the group consisting of monohydroxy compounds (2) of the formula HO-R^{x}, in which R^{X} has the definition stated therefor in Claim 1, but is not a radical of the formula -CR^{p}₃,
primary alcohols (3) of the formula HO-R^{y},
water (4) and mixtures thereof are added to the reaction mixture,
and with the proviso that monohydroxy compounds (2) and primary alcohols (3) are used in amounts of 1.0 to 3.0 mol, preferably 1.5 to 2.5 mol per mole of silane (1), and dihydroxy compounds (5) are used in amounts of 0.7 to 1.5 mol, preferably 0.9 to 1.1 mol per mole of silane (1),
wherein RP, R^{x}, R^{y} and R^{z} have the definition stated therefor in Claim 1.

11. Process for preparing the mixture of polymeric alkyl silicates of the formula (I) according to Claim 10, **characterized in that**
silanes (1), selected from the group of tetrachlorosilane (1a), tetraalkoxysilane (1b), partial hydrolysates of tetrachlorosilane, partial hydrolysates of tetraalkoxysilane and mixtures thereof,
optionally with the addition of solvents (7),
are reacted with secondary alcohols (2a) or tertiary alcohols (2b) of the formula
HO-R^{x},
wherein R^{x} is a radical of the formula -CHR^{p}₂ or - CR^{p}₃,
optionally with the addition of primary alcohols (3) of the formula
HO-R^{y} and/or
optionally with the addition of water (4),
and with dihydroxy compounds (5) of formula
HO-R^{z}-OH
or salts thereof,
optionally in the presence of catalysts (6),
simultaneously in one step or successively in two steps,
with the proviso that if SiCl₄ (1a) is reacted with a tertiary alcohol (2b) HO-R^{x}, wherein R^{X} is a radical of the formula -CR^{p}₃, at least one further compound selected from the group consisting of secondary alcohols (2a) HO-R^{x}, where R^{x} is a radical of the formula -CHR^{p}₂,
primary alcohols (3) HO-RY,
water (4) and mixtures thereof are added to the reaction mixture,
and with the proviso that alcohols of the formulae HO-R^{x} and HO-R^{y} are used in amounts of 1.0 to 3.0 mol, preferably 1.5 to 2.5 mol per mole of silane (1), and dihydroxy compounds (5) are used in amounts of 0.7 to 1.5 mol, preferably 0.9 to 1.1 mol per mole of silane (1),
wherein RP, R^{x}, R^{y} and R^{z} have the definition stated therefor in Claim 1.

12. Process for preparing the mixture of polymeric alkyl silicates of the formula (I) according to Claim 11, **characterized in that**
in a first step,
silanes (1), selected from the group of tetrachlorosilane (1a), tetraalkoxysilanes (1b), partial hydrolysates of tetrachlorosilane, partial hydrolysates of tetraalkoxysilane and mixtures thereof,
optionally with the addition of solvents (7),
are reacted with secondary alcohols (2a) or tertiary alcohols (2b) of the formula
HO-R^{x},
wherein R^{x} is a radical of the formula -CHR^{p}₂ or - CR^{p}₃,
optionally with the addition of primary alcohols (3) of the formula
HO-R^{y} and/or
optionally with the addition of water (4),
and
in a second step,
the reaction mixtures obtained from the first step are reacted with dihydroxy compounds (5) of formula
HO-R^{z}-OH
or salts thereof,
optionally in the presence of catalysts (6) and
optionally with the addition of solvents (7),
with the proviso that if SiCl₄ (1a) is reacted with a tertiary alcohol (2b) HO-R^{x}, wherein R^{X} is a radical of the formula -CR^{p}₃, at least one further compound selected from the group consisting of secondary alcohols (2a) HO-R^{x}, where R^{x} is a radical of the formula -CHR^{p}₂,
primary alcohols (3) HO-RY,
water (4) and mixtures thereof are added to the reaction mixture,
and with the proviso that alcohols of the formulae HO-R^{x} and HO-R^{y} are used in amounts of 1.0 to 3.0 mol, preferably 1.5 to 2.5 mol per mole of silane (1), and dihydroxy compounds (5) are used in amounts of 0.7 to 1.5 mol, preferably 0.9 to 1.1 mol per mole of silane (1),
wherein RP, R^{x}, R^{y} and R^{z} have the definition stated therefor in Claim 1.

13. Process for preparing the mixture of polymeric alkyl silicates of the formula (I) according to Claim 10, 11 or 12, **characterized in that** the catalysts (6) used are nitrogen bases selected from the group consisting of pyridine, ammonia, urea, ethylenediamine, triethylamine, tributylamine and mixtures thereof.

14. Process for preparing the mixture of polymeric alkyl silicates of the formula (I) according to any of Claims 10 to 13, **characterized in that** solvents (7) are used in the second process step.

15. Process for preparing the mixture of polymeric alkyl silicates of the formula (I) according to any of Claims 1 to 9,
by reacting compounds of the formula
Si(H)ₗ(OR^{X})ₖ(OR^{y})ⱼ
and/or partial hydrolysates thereof,
where
the index l is 1, 2, 3 or 4, preferably 1 or 2,
and the indices k and j are each independently 0, 1, 2 or 3,
with the proviso that the sum of l + k + j equals 4,
with dihydroxy compounds (5) of the formula
HO-R^{z}-OH
optionally in the presence of a catalyst (6) and
optionally with the addition of solvents (7)
with elimination of hydrogen,
wherein R^{x}, R^{y} and R^{z} have the definition stated therefor in Claim 1.

## Revendications

1. Mélange de silicates d'alkyle polymères comprenant un composé organosilicié contenant au moins, à raison d'au moins 90 % en poids, de préférence d'au moins 95 % en poids, un mélange de silicates d'alkyle polymères de Formule (I)
[SiO_{4/2}]ₐ [(R^{x}O)SiO_{3/2}]_{b} [(R^{y}O)SiO_{3/2}]_{b}' [(R^{x}O)₂SiO_{2/2}]_{c} [(R^{x}O)(R^{y}O)SiO_{2/2}]_{c}' [(R^{y}O)₂SiO_{2/2}]_{c}" [(R^{x}O)₃SiO_{1/2}]_{d} [(R^{x}O)₂(R^{y}O)SiO_{1/2}]_{d}' [(R^{x}O)(R^{y}O)₂SiO_{1/2}]_{d}" [(R^{y}O)₃SiO_{1/2}]_{d}‴ [O_{1/2}R^{z}O_{1/2}]ₑ [O_{1/2}R^{z}OH]ₑ' [O_{1/2}R^{z}OR^{X}]ₑ" [O_{1/2}R^{z}OR^{y}*]ₑ‴ **(I),**
dans laquelle
les indices a, b, b', c, c', c", d, d', d", d‴, e', e" et e‴ représentent indépendamment les uns des autres un nombre dans la plage de 0 à 5 000, l'indice e représentant un nombre dans la plage de 2 à 5 000, à la condition que la somme de tous les indices soit d'au moins 5 ;
les radicaux R^{x} sont indépendamment les uns des autres choisis parmi les radicaux qui satisfont à au moins l'une des conditions suivantes :
(a) R^{x} est un radical de formule -CHR^{p}₂ ou -CR^{p}₃, RP représentant indépendamment les uns des autres un radical hydrocarboné ayant 1 à 50 atomes de carbone, monovalent, non substitué ou substitué,
(b) R^{x} représente un radical hydrocarboné en C₅-C₂₀, substitué ou non substitué, qui est deux fois ramifié sur l'atome de carbone β,
(c) R^{x} représente un radical cyclopentyle, cyclohexyle ou cycloheptyle, non substitué ou substitué par des groupes alkyle, ayant en tout au plus 9 atomes de carbone ;
les radicaux R^{y} représentent indépendamment les uns des autres un atome d'hydrogène, un radical méthyle, éthyle, n-propyle ou n-butyle, de préférence un radical méthyle ou éthyle ;
les radicaux ORY pouvant être partiellement remplacés par des atomes H liés à Si ;
R^{y}* représente un radical méthyle, éthyle, n-propyle ou n-butyle, de préférence un radical méthyle ou éthyle ; les radicaux R^{z} représentent indépendamment les uns des autres un radical divalent, non substitué ou substitué, lié par l'intermédiaire d'un carbone, ou un radical divalent, lié par l'intermédiaire d'un silicium, des atomes C ou Si individuels pouvant être remplacés par des atomes d'oxygène ;
à la condition que les motifs [O_{1/2}R²O_{1/2}] soient liés à deux motifs, choisis indépendamment l'un de l'autre dans le groupe des motifs [SiO_{4/2}], [R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SipO_{2/2}], [(R^{x}O)₃SiO_{1/2}], [(R^{x}O)₂(R^{y}O)SiO_{1/2}], [(R^{x}O)(R^{y}O)₂SiO_{1/2}] et [R^{y}O)₃SiO_{1/2}] ;
à la condition que les motifs [O_{1/2}R^{Z}OH], [O_{1/2}R^{Z}OR^{X}] et [O_{1/2}R^{z}OR^{y}*] soient liés à un motif, choisi indépendamment l'un de l'autre dans le groupe des motifs [SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}];
à la condition que la proportion molaire de tous les radicaux R^{y} dans le silicate d'alkyle polymère soit d'au plus 50 % en moles par rapport à la quantité molaire de la somme de tous les radicaux R^{x}, R^{y} et R^{y}*,
la proportion molaire du radical ORY complété par un hydrogène étant d'au plus 33 % en moles par rapport à la quantité molaire de la somme de tous les radicaux OR^{x} et OR^{y} ;
à la condition que soient exclus les silicates d'alkyle polymères suivants, constitués exclusivement de composés de Formule II : 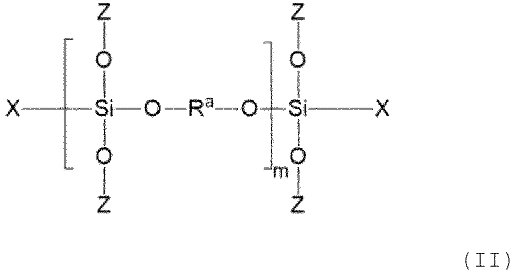 dans laquelle
Z représente un radical de formule -Si(OR^{b})₃ ou un radical de formule -CR^{c}₃,
R^{a} représente indépendamment les uns des autres un radical divalent, non substitué ou substitué, lié par l'intermédiaire d'un carbone, ou un radical divalent lié par l'intermédiaire d'un silicium,
R^{b} représente indépendamment les uns des autres un radical hydrocarboné monovalent, non substitué ou substitué, ayant 4 à 40 atomes de carbone, qui est ramifié sur l'atome de carbone α ou est deux fois ramifié sur l'atome de carbone β,
R^{c} représente indépendamment les uns des autres un radical hydrocarboné monovalent, non substitué ou substitué, ayant 1 à 50 atomes de carbone,
X représente un atome d'halogène, un radical hydrocarboné en C₁ à C₄₀ lié par l'intermédiaire d'un oxygène, non substitué ou substitué, des atomes de carbone individuels pouvant être remplacés par des atomes d'oxygène, un radical de formule -O-Si(OR^{b})₃ ou un radical de formule -OSiRⁿ₃,
Rⁿ représente indépendamment les uns des autres un radical hydrocarboné monovalent, non substitué ou substitué, en C₁ à C₄₀, et
m représente un nombre entier valant au moins 2 et au plus 1 000.

2. Mélange de silicates d'alkyle polymères de formule (I)
dans laquelle
les indices a, b, b', c, c', c", d, d', d", d‴, e', e" et e‴ représentent indépendamment les uns des autres un nombre dans la plage de 0 à 5 000, l'indice e représentant un nombre dans la plage de 2 à 5 000, à la condition que la somme de tous les indices soit d'au moins 5 ;
les radicaux R^{x} sont indépendamment les uns des autres choisis parmi les radicaux qui satisfont à au moins l'une des conditions suivantes :
(a) R^{x} est un radical de formule -CHR^{p}₂ ou -CR^{p}₃, RP représentant indépendamment les uns des autres un radical hydrocarboné ayant 1 à 50 atomes de carbone, monovalent, non substitué ou substitué,
(b) R^{x} est un radical hydrocarboné en C₅-C₂₀, substitué ou non substitué, qui est deux fois ramifié sur l'atome de carbone β,
(c) R^{x} représente un radical cyclopentyle, cyclohexyle ou cycloheptyle, non substitué ou substitué par des groupes alkyle, ayant en tout au plus 9 atomes de carbone ;
les radicaux R^{y} représentent indépendamment les uns des autres un atome d'hydrogène, un radical méthyle, éthyle, n-propyle ou n-butyle, de préférence un radical méthyle ou éthyle ; les radicaux ORY pouvant être partiellement remplacés par des atomes H liés à Si ;
R^{y}* représente un radical méthyle, éthyle, n-propyle ou n-butyle, de préférence un radical méthyle ou éthyle ; les radicaux R^{z} représentent indépendamment les uns des autres un radical divalent, non substitué ou substitué, lié par l'intermédiaire d'un carbone, ou un radical divalent, lié par l'intermédiaire d'un silicium, des atomes C ou Si individuels pouvant être remplacés par des atomes d'oxygène ;
à la condition que les motifs [O_{1/2}R^{z}O_{1/2}] soient liés à deux motifs, choisis indépendamment l'un de l'autre dans le groupe des motifs [SiO_{4/2}], [R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}], [(R^{x}O)₃SiO_{1/2}], [(R^{x}O)₂(R^{y}O)SiO_{1/2}], [(R^{x}O)(R^{y}O)₂SiO_{1/2}] et [R^{y}O)₃SiO_{1/2}] ;
à la condition que les motifs [O_{1/2}R^{Z}OH], [O_{1/2}R^{Z}OR^{X}] et [O_{1/2}R^{z}OR^{y}*] soient liés à un motif, choisi indépendamment l'un de l'autre dans le groupe des motifs [SiO_{4/2}], [(R^{x}O)SiO_{3/2}], [(R^{y}O)SiO_{3/2}], [(R^{x}O)₂SiO_{2/2}], [(R^{x}O)(R^{y}O)SiO_{2/2}], [(R^{y}O)₂SiO_{2/2}];
à la condition que la proportion molaire de tous les radicaux RY dans le silicate d'alkyle polymère soit d'au plus 50 % en moles par rapport à la quantité molaire de la somme de tous les radicaux R^{x}, R^{y} et R^{y}*,
la proportion molaire du radical ORY complété par un hydrogène étant d'au plus 33 % en moles par rapport à la quantité molaire de la somme de tous les radicaux OR^{x} et ORY ;
à la condition que soient exclus les silicates d'alkyle polymères suivants, constitués exclusivement de composés de Formule II : 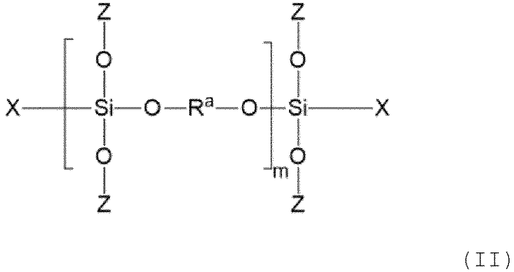 dans laquelle
Z représente un radical de formule -Si(OR^{b})₃ ou un radical de formule -CR^{c}₃,
R^{a} représente indépendamment les uns des autres un radical divalent, non substitué ou substitué, lié par l'intermédiaire d'un carbone, ou un radical divalent lié par l'intermédiaire d'un silicium,
R^{b} représente indépendamment les uns des autres un radical hydrocarboné monovalent, non substitué ou substitué, ayant 4 à 40 atomes de carbone, qui est ramifié sur l'atome de carbone α ou est deux fois ramifié sur l'atome de carbone β,
R^{c} représente indépendamment les uns des autres un radical hydrocarboné monovalent, non substitué ou substitué, ayant 1 à 50 atomes de carbone,
X représente un atome d'halogène, un radical hydrocarboné en C₁ à C₄₀ lié par l'intermédiaire d'un oxygène, non substitué ou substitué, des atomes de carbone individuels pouvant être remplacés par des atomes d'oxygène, un radical de formule -O-Si(OR^{b})₃ ou un radical de formule-OSiRⁿ₃,
Rⁿ représente indépendamment les uns des autres un radical hydrocarboné monovalent, non substitué ou substitué, en C₁ à C₄₀, et
m représente un nombre entier valant au moins 2 et au plus 1 000.

3. Mélange de silicates d'alkyle polymères selon la revendication 1 ou 2, **caractérisé en ce que** les silicates d'alkyle polymères ne contiennent pas de radicaux liés à SiC.

4. Mélange de silicates d'alkyle polymères selon la revendication 1, 2 ou 3, **caractérisé en ce que** les silicates d'alkyle polymères contiennent au moins 2, de préférence au moins 3 éléments structuraux choisis dans le groupe des formules 1 à 10 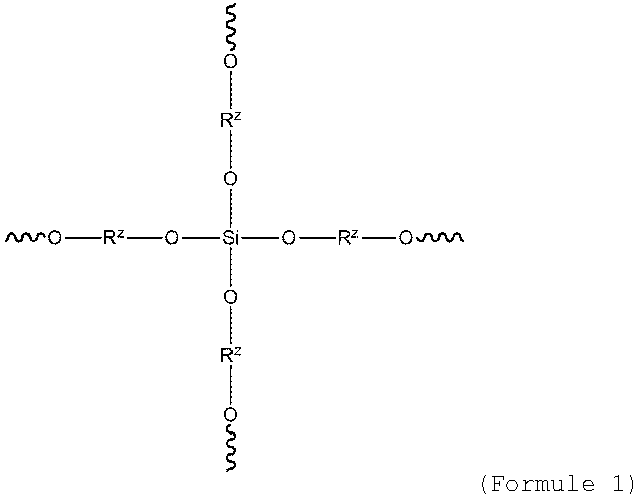 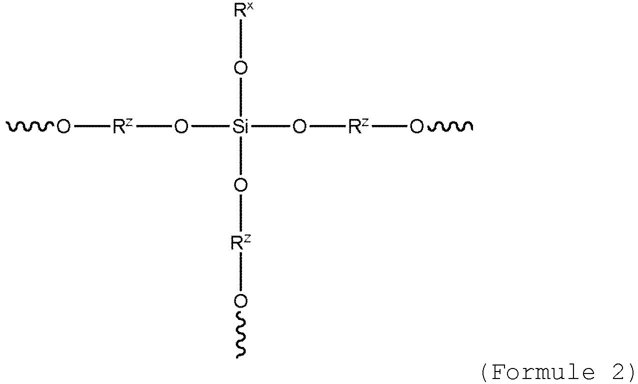 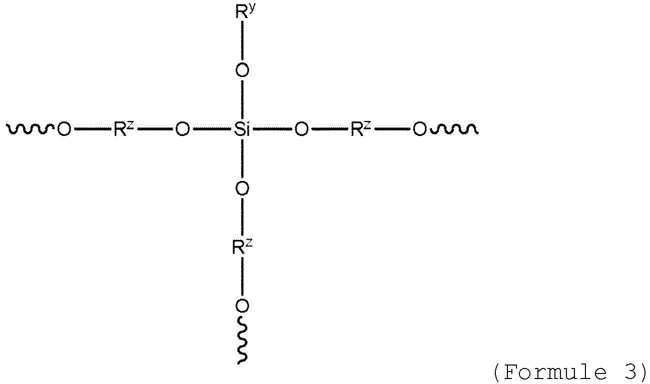 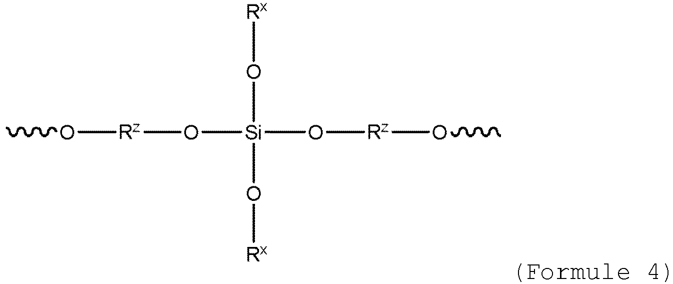 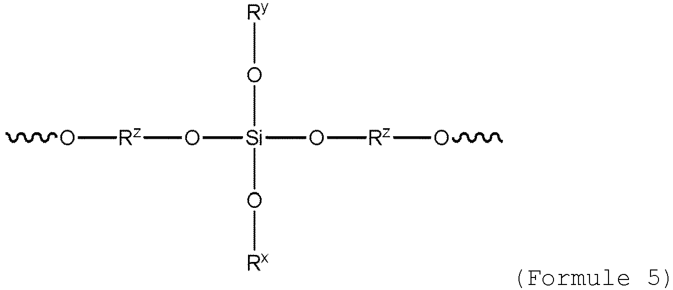 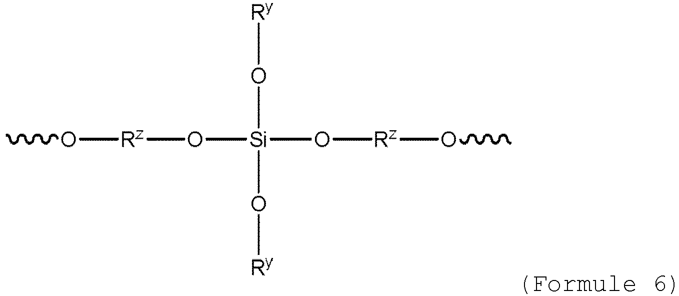 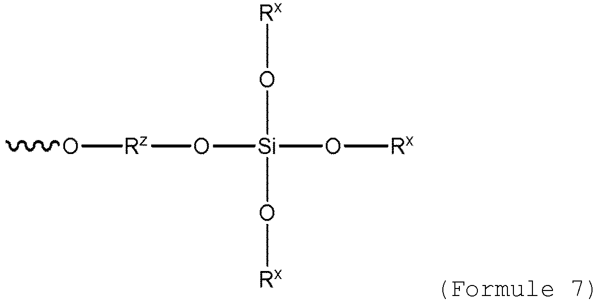 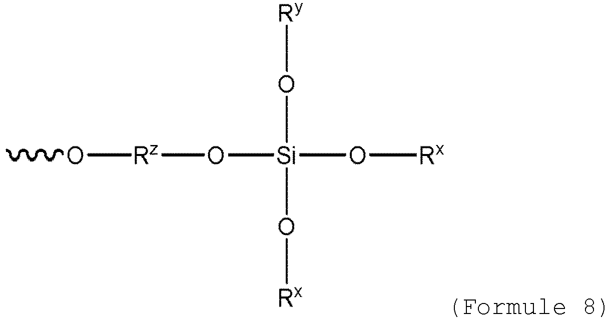 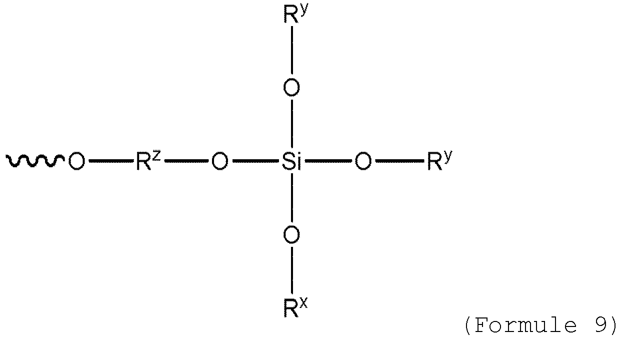 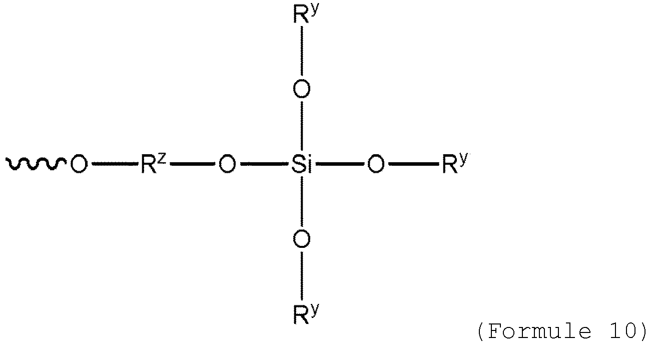 à la condition que la somme du nombre de motifs structuraux de formules 1 + 2 + 3 + 5 + 6 soit inférieure à 60 %, de préférence inférieure à 50 %, d'une manière particulièrement préférée inférieure à 35 % et tout spécialement inférieure à 20 %, dans chaque cas par rapport à la somme du nombre des motifs structuraux, et à la condition que, quand un motif structural de formule 4 est présent avec R^{x} représentant -CR^{p}₃, au moins un autre motif structural, choisi dans le groupe de formules 1, 2, 3, 5, 6, 9 et 10 soit présent, R^{p}, R^{x}, R^{y} et R^{z} ayant les significations qui leur sont données dans la revendication 1.

5. Mélange de silicates d'alkyle polymères selon l'une des revendications 1 à 4, **caractérisé en ce que** R^{x} est un radical de formule -CHR^{p}₂ ou -CR^{p}₃, R^{p} représentant indépendamment les uns des autres un radical hydrocarboné monovalent, non substitué ou substitué, ayant 1 à 10 atomes de carbone, de préférence 1 à 6 atomes de carbone.

6. Mélange de silicates d'alkyle polymères selon l'une des revendications 1 à 5, **caractérisé en ce que** les radicaux R^{x} sont choisis dans le groupe consistant en le radical tert.-butyle, le radical 2-butyle, 3-méthyl-2-butyle, 3-méthyl-2-pentyle, le radical 3-pentyle, le radical 2-hexyle, le radical 3-hexyle, le radical 2-heptyle, le radical 2-octyle, le radical 1-phényléthyle, le radical 1-phényl-1-propyle, le radical 1,1-diméthylpropyle et les mélanges de ceux-ci.

7. Mélange de silicates d'alkyle polymères selon l'une des revendications 1 à 6, **caractérisé en ce que** les radicaux R^{z} représentent indépendamment les uns des autres un radical hydrocarboné divalent ayant 3 à 200 atomes de carbone, de préférence ayant 3 à 50 atomes de carbone, les atomes de carbone pouvant être remplacés par des atomes d'oxygène ou par des radicaux siloxanyle de formule -(R³₂SiO)ₒ-SiR³₂-,
R³ représentant indépendamment les uns des autres un radical hydrocarboné en C₁ à C₂₀, de préférence un radical hydrocarboné en C₁ à Ce, et
o représente un nombre entier de 0 à 100, de préférence un nombre entier de 1 à 20.

8. Mélange de silicates d'alkyle polymères selon l'une des revendications 1 à 7, **caractérisé en ce que** les radicaux R^{z} sont choisis dans le groupe consistant en le radical 1,3-propylène, le radical 1,4-butylène, le radical 1,2-cyclohexylidène, le radical 1,3-cyclohexylidène, le radical 1,4-cyclohexylidène, le radical 1,2-phénylène, le radical 1,3-phénylène et le radical 1,4-phénylène, ainsi que les radicaux de formules
-CR⁴₂-CR⁴₂-(OCR⁴₂-CR⁴₂)ₚ-,
-CR⁴₂-(CR⁴₂)_{q}-(OCR⁴₂-(CR⁴₂)_{q})ₚ-,
- (Me₂SiO)ₒ-Me₂Si-,
-CH₂-CH₂-CH₂-(Me₂SiO)ₒ-Me₂Si-CH₂-CH₂-CH₂-,
-CH₂-CH₂-(Me₂SiO)ₒ-Me₂Si-CH₂-CH₂- et
-CH₂- (Me₂SiO)ₒ-Me₂Si-CH₂-,
dans lesquelles
Me représente un radical méthyle,
R⁴ peut être identique ou différent et représente un atome d'hydrogène ou un radical hydrocarboné en C₁ à C₁₈, de préférence un atome d'hydrogène ou un radical méthyle,
o représente un nombre entier de 0 à 100, de préférence de 1 à 20,
p représente un nombre entier de 0 à 100, de préférence de 1 à 20, et
q représente un nombre entier de 1 à 100, de préférence de 1 à 50.

9. Mélange de silicates d'alkyle polymères selon l'une des revendications 1 à 8, dans lequel les indices a, b, b', c, c', c", d, d', d", d‴, e', e" et e‴ représentent indépendamment les uns des autres un nombre dans la plage de 0 à 500, de préférence de 0 à 20, l'indice e désignant un nombre dans la plage de 2 à 500, de préférence de 2 à 20, à la condition que la somme de tous les indices vaille au moins 5.

10. Procédé de fabrication du mélange de silicates d'alkyle polymères de formule (I) selon l'une des revendications 1 à 9, dans lequel
on fait réagir simultanément en une étape ou successivement en deux étapes, de préférence successivement en deux étapes,
des silanes (1) choisis dans le groupe du tétrachlorosilane (1a), d'un tétraalcoxysilane (1b), d'hydrolysats partiels de tétrachlorosilane, d'hydrolysats partiels d'un tétraalcoxysilane et de leurs mélanges,
éventuellement avec addition de solvants (7),
avec des composés monohydroxylés (2) de formule
HO-R^{x},
éventuellement avec addition d'alcools primaires (3) de formule
HO-RY et/ou
éventuellement avec addition d'eau (4),
et avec des composés dihydroxylés (5) de formule
HO-R^{z}-OH
ou leurs sels
éventuellement en présence de catalyseurs (6),
à la condition que, quand SiCl₄ (1a) est mis à réagir avec les composés monohydroxylés (2) de formule HO-R^{x} dans laquelle R^{x} est un radical de formule -CR^{p}₃, on ajoute au mélange réactionnel au moins un autre composé choisi dans le groupe consistant en les composés monohydroxylés (2) de formule HO-R^{x} dans laquelle R^{x} a les significations qui lui sont données dans la revendication 1, mais n'est pas un radical de formule -CR^{p}₃,
des alcools primaires (3) de formule HO-RY,
de l'eau (4) et des mélanges de ceux-ci,
et à la condition que l'on utilise les composés monohydroxylés (2) et les alcools primaires (3) en des quantités de 1,0 à 3,0 moles, de préférence de 1,5 à 2,5 moles par mole du silane (1) et des composés dihydroxylés (5) en des quantités de 0,7 à 1,5 mole, de préférence de 0,9 à 1,1 mole, par mole du silane (1),
RP, R^{x}, R^{y} et R^{z} ayant les significations qui leur sont données dans la revendication 1.

11. Procédé de fabrication du mélange de silicates d'alkyle polymères de formule (I) selon la revendication 10, **caractérisé en ce qu'**on fait réagir, simultanément en une étape ou successivement en deux étapes,
des silanes (1) choisis dans le groupe du tétrachlorosilane (1a), d'un tétraalcoxysilane (1b), d'hydrolysats partiels de tétrachlorosilane, d'hydrolysats partiels d'un tétraalcoxysilane et de mélanges de ceux-ci,
éventuellement avec addition de solvants (7),
avec des alcools secondaires (2a) ou des alcools tertiaires (2b) de formule
HO-R^{x},
dans laquelle R^{x} est un radical de formule -CHR^{p}₂ ou -CR^{p}₃,
éventuellement avec addition d'alcools primaires (3) de formule
HO-R^{y} et/ou
éventuellement avec addition d'eau (4),
et avec des composés dihydroxylés (5) de formule
HO-R^{z}-OH
ou des sels de ceux-ci
éventuellement en présence de catalyseurs (6),
à la condition que, quand on fait réagir du SiCl₄ (1a) avec un alcool tertiaire (2b) HO-R^{x}, R^{x} représentant alors un radical de formule -CR^{p}₃, on ajoute au mélange réactionnel au moins un autre composé choisi dans le groupe consistant en des alcools secondaires (2a) HO-R^{x}, R^{x} étant alors un radical de formule -CHR^{p}₂,
des alcools primaires (3) HO-RY,
de l'eau (4) et des mélanges de ceux-ci,
et à la condition que l'on utilise des alcools de formules HO-R^{x} et HO-R^{y} en des quantités de 1,0 à 3,0 moles, de préférence de 1,5 à 2,5 moles par mole du silane (1) et des composés dihydroxylés (5) en des quantités de 0,7 à 1,5 mole, de préférence de 0,9 à 1,1 mole par mole du silane (1),
R^{p}, R^{x}, R^{y} et R^{z} ayant les significations qui leur sont données dans la revendication 1.

12. Procédé de fabrication du mélange de silicates d'alkyle polymères de formule (I) selon la revendication 11, **caractérisé en ce qu'**on fait réagir dans une première étape
des silanes (1) choisis dans le groupe du tétrachlorosilane (1a), des tétraalcoxysilanes (1b), d'hydrolysats partiels de tétrachlorosilane, d'hydrolysats partiels d'un tétraalcoxysilane et de mélanges de ceux-ci,
éventuellement avec addition de solvants (7),
avec des alcools secondaires (2a) ou des alcools tertiaires (2b) de formule
HO-R^{x},
dans laquelle R^{x} représente un radical de formule -CHR^{p}₂ ou -CR^{p}₃,
éventuellement avec addition d'alcools primaires (3) de formule
HO-R^{y} et/ou
éventuellement avec addition d'eau (4), et
dans une deuxième étape, on fait réagir les mélanges réactionnels obtenus dans la première étape avec des composés dihydroxylés (5) de formule
HO-R^{z}-OH
ou des sels de ceux-ci
éventuellement en présence de catalyseurs (6) et éventuellement avec addition de solvants (7),
à la condition que, quand on fait réagir du SiCl₄ (1a) avec un alcool tertiaire (2b) HO-R^{x}, R^{x} étant alors un radical de formule -CR^{p}₃, on ajoute au mélange réactionnel au moins un autre composé choisi dans le groupe consistant en les alcools secondaires (2a) HO-R^{x}, R^{x} étant alors un radical de formule -CHR^{p}₂,
des alcools primaires (3) HO-RY,
de l'eau (4) et des mélanges de ceux-ci,
et à la condition que l'on utilise des alcools de formules HO-R^{x} et HO-RY en des quantités de 1,0 à 3,0 moles, de préférence de 1,5 à 2,5 moles par mole du silane (1) et des composés dihydroxylés (5) en des quantités de 0,7 à 1,5 mole, de préférence de 0,9 à 1,1 mole par mole du silane (1),
RP, R^{x}, R^{y} et R^{z} ayant les significations qui leur sont données dans la revendication 1.

13. Procédé de fabrication du mélange de silicates d'alkyle polymères de formule (I) selon la revendication 10, 11 ou 12, **caractérisé en ce qu'**on utilise comme catalyseurs (6) des bases azotées choisies dans le groupe consistant en la pyridine, l'ammoniac, l'urée, l'éthylènediamine, la triéthylamine, la tributylamine et les mélanges de ceux-ci.

14. Procédé de fabrication du mélange de silicates d'alkyle polymères de formule (I) selon l'une des revendications 10 à 13, **caractérisé en ce qu'**on utilise des solvants (7) dans la deuxième étape du procédé.

15. Procédé de fabrication du mélange de silicates d'alkyle polymères de formule (I) selon l'une des revendications 1 à 9, dans lequel on fait réagir des composés de formule
Si(H)₁(OR^{x})ₖ(OR^{y})ⱼ et/ou leurs hydrolysats partiels, l'indice 1 représentant 1, 2, 3 ou 4, de préférence 1 ou 2,
et les indices k et j représentant indépendamment l'un de l'autre 0, 1, 2 ou 3,
à la condition que la somme l + k + j soit égale à 4, avec des composés dihydroxylés (5) de formule
HO-R^{z}-OH
éventuellement en présence d'un catalyseur (6) et éventuellement avec addition de solvants (7),
avec dissociation d'hydrogène,
R^{x}, R^{y} et R^{z} ayant les significations qui leur sont données dans la revendication 1.
